# EUROPEAN PATENT SPECIFICATION

(11) **EP 3 505 408 B1**
(45) Date of publication and mention of the grant of the patent: **21.12.2022**
(21) Application number: 17843732.3
(22) Date of filing: 25.08.2017
(51) Int. Cl.: B60T 8/94, B60T 13/36, B60T 8/36

(54) **PNEUMATIC BRAKE SYSTEM**
DRUCKLUFTBREMSENSYSTEM
SYSTÈME DE FREIN PNEUMATIQUE

(30) Priority: 25.08.2016 JP 2016164821; 13.01.2017 JP 2017003927
(43) Date of publication of application: 03.07.2019
(73) Proprietor: Nabtesco Automotive Corporation, Tokyo 102-0093 (JP)
(72) Inventor: TANAKA, Katsunori, Tokyo 102-0093 (JP); OOTA, Yusuke, Tokyo 102-0093 (JP)
(74) Representative: Grünecker Patent- und Rechtsanwälte PartG mbB
(86) International application number: PCT/JP2017/030536
(87) International publication number: WO 2018/038256

(56) References cited:
- WO-A1-2012/101757
- WO-A1-2012/101757
- JP-A- H09 505 251
- JP-A- H09 505 251
- JP-A- 2012 011 984
- JP-A- 2012 011 984
- JP-B2- 3 705 808

## Description

### TECHNICAL FIELD

The present invention relates to a pneumatic brake system which actuates a brake using air.

### BACKGROUND ART

In recent years, as an advanced driver-assistance technique, systems have been developed for realizing vehicle platooning in which a plurality of vehicles travels in a platoon formation while communicating with each other. The respective vehicles forming the platoon travel so as to keep a prescribed inter-vehicular distance while communicating with each other. In particular, in the field of logistics, systems have been proposed for vehicle platooning of freight vehicles such as trucks and buses in which a platoon is formed by a lead vehicle driven by a driver and following vehicles that are either driverless or ridden by an observer. In the following vehicles, various controls are performed so as to follow a behavior of the lead vehicle that leads the platoon (for example, refer to Patent Document 1). For example, in brake control, when the lead vehicle actuates its brakes, the following vehicles actuate their brakes so as to follow the braking of the lead vehicle.

Many freight vehicles are mounted with a pneumatic brake system which actuates brakes using air (for example, compressed air). Therefore, in a following vehicle mounted with a pneumatic brake system, each actuator constituting the pneumatic brake system is controlled so as to follow brake control of the lead vehicle.

Since driving of a following vehicle is either driverless or automated driving in which vehicle behavior is monitored by an observer, operations by a driver cannot be expected when an abnormality in the pneumatic brake system of the following vehicle occurs. Therefore, pneumatic brake systems are required to have redundancy. For example, Patent Document 1 proposes a vehicle platooning control system which multiplexes brake systems. The system is equipped with a regular brake actuator, an emergency brake actuator, and a safety brake actuator. The regular brake actuator is a device for driving a regular brake. The emergency brake actuator is used when the regular brake actuator fails or used together with the regular brake actuator when bringing a vehicle to an emergency stop. The safety brake actuator is provided as an actuator of a separate system from the regular brake actuator and the emergency brake actuator, and is a device for driving a safety brake when both the regular brake actuator and the emergency brake actuator fail.

### PRIOR ART DOCUMENT

### Patent Document

Patent Document 1: Japanese Laid-Open Patent Publication No. 2007-233965

The following patent documents can be also cited as prior art: JP 2012 011984 A, JP H09 505251 A, WO 2012/101757 A1.

### SUMMARY OF THE INVENTION

### Problems that the Invention is to Solve

In the vehicle platooning control system described above, a control device performs control so as to actuate an emergency brake when an abnormality of an electric system such as a position detection device is detected. However, abnormalities that may occur in a pneumatic brake system is not limited to abnormalities of the electric system. For example, no consideration is given to promptly switching from one brake module to another brake module when an abnormality occurs in a part of a structure such as a pipe or a valve device in the one brake module. Therefore, there are needs to further increase the redundancy of pneumatic brake systems so that even abnormalities occurring in a part of a structure such as a pipe or a valve device can be accommodated.

In addition, the vehicle platooning control system described above does not envisage how the emergency brake actuator and the like are to be mounted to a vehicle.

It should be noted that such problems are not limited to a vehicle participating in vehicle platooning, but are more or less shared by self-driving vehicles and the like which are mounted with a pneumatic brake system and travel independently without forming a platoon.

An object of the present invention is to provide a pneumatic brake system capable of increasing redundancy or safety.

### Means for Solving the Problems

In accordance with one aspect of the present invention as defined in independent claim 1, a pneumatic brake system is provided that that is configured to actuate a brake by supplying air to a brake mechanism provided on each wheel of a vehicle and to release the brake by discharging air from the brake mechanism. The pneumatic brake system comprises, for each brake mechanism, a safety air supplier which is actuated by a safety brake control device in an emergency to supply air to the brake mechanism. The pneumatic brake system further comprises a shuttle valve which is connected to the safety air supplier and to a brake air supply circuit for supplying air to the brake mechanism during normal time by way of a route that is different from the safety air supplier. The shuttle valve allows a flow of air only in a direction toward the brake mechanism from one of the safety air supplier and the brake air supply circuit that has higher pressure.

In accordance with another aspect of the present invention as defined in independent claim 6, a pneumatic brake system is provided that that is configured to supply and discharge air from an air supply source to and from a brake mechanism which actuates and releases a service brake of a vehicle. The pneumatic brake system comprises a plurality of safety modules. When a modulator controlled by a first brake control device during normal time does not actuate, each safety module is controlled by a second brake control device and performs supply and discharge of air to and from the brake mechanism, wherein said second brake control device only controls braking in a prescribed state where an abnormality has occurred in said first brake device.

### BRIEF DESCRIPTION OF THE DRAWINGS

[Fig. 1]

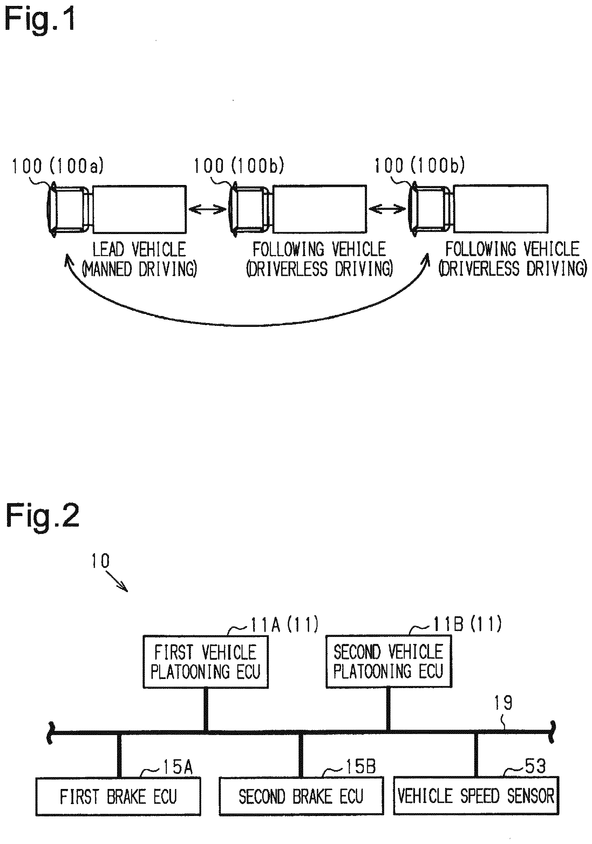

   Fig. 1 is a schematic view according to an embodiment of a pneumatic brake system of each vehicle which is mounted with the pneumatic brake system and forms a platoon.
[Fig. 2]
   Fig. 2 is a schematic view showing a connection state of ECUs of the pneumatic brake system in each vehicle shown in Fig. 1.
[Fig. 3]

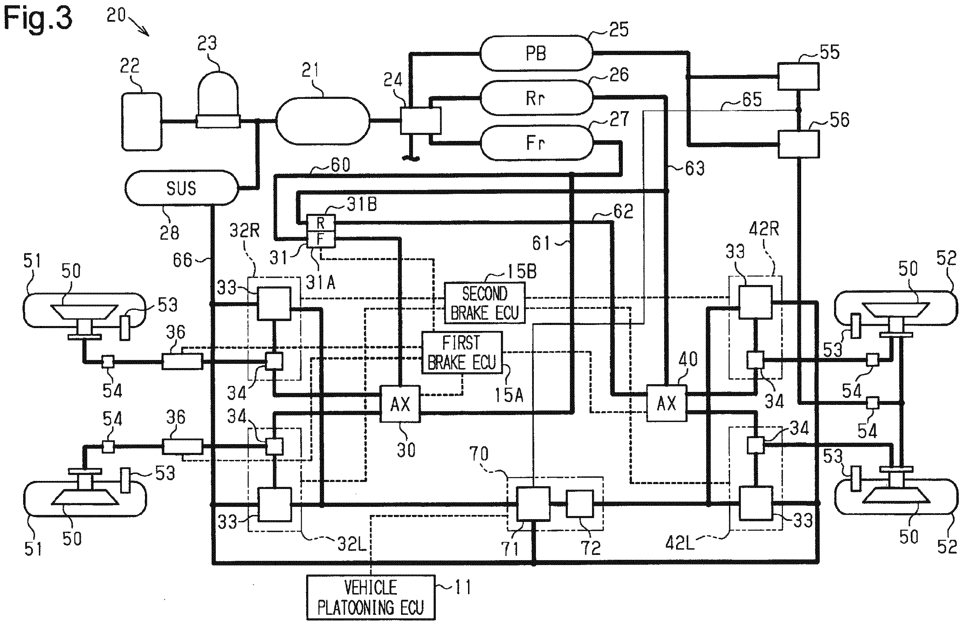

   Fig. 3 is a schematic view showing a configuration of the pneumatic brake system shown in Fig. 2 according to a first embodiment.
[Fig. 4]

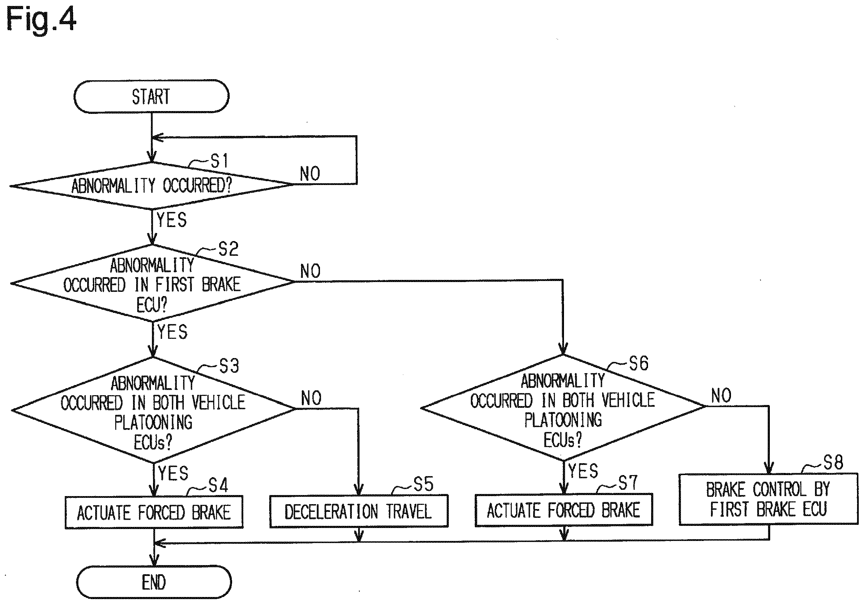

   Fig. 4 is a flow chart showing an operation of a second brake ECU shown in Fig. 3.
[Fig. 5]

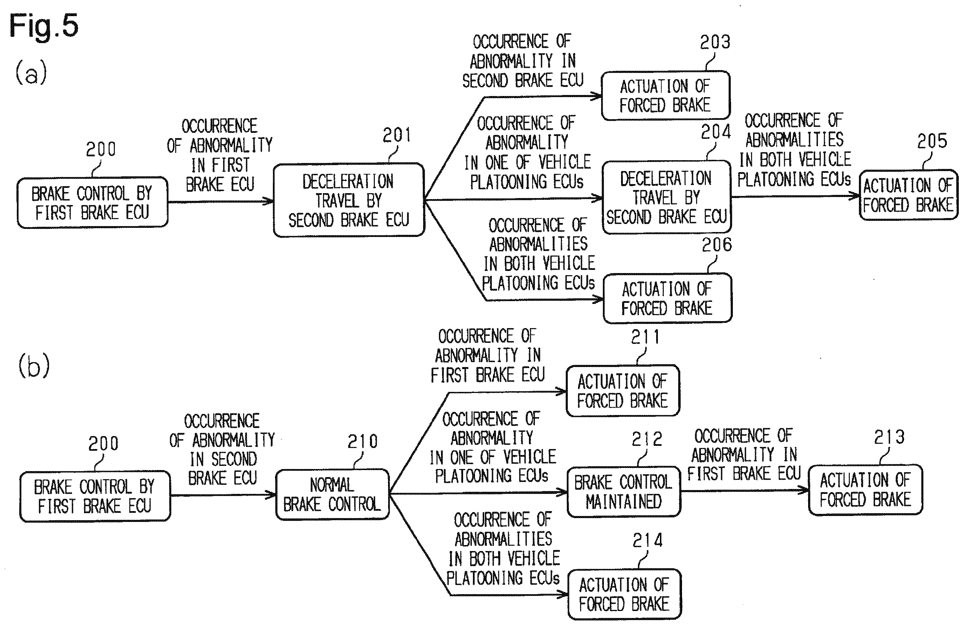

   Fig. 5 shows transitions of states in an emergency in the pneumatic brake system shown in Fig. 3, in which (a) is a conceptual diagram showing state transitions when an abnormality first occurs in a first brake ECU and (b) is a conceptual diagram showing state transitions when an abnormality first occurs in a second brake ECU.
[Fig. 6]

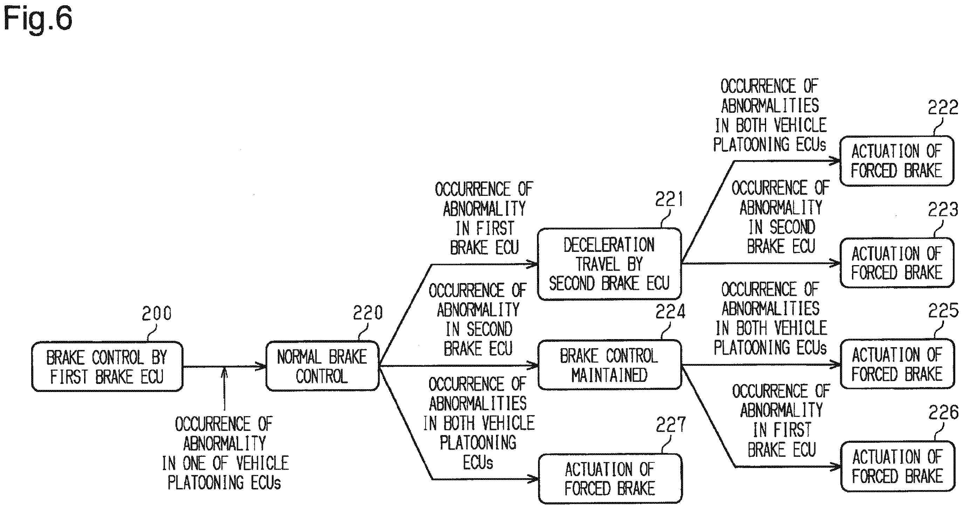

   Fig. 6 is a conceptual diagram showing state transitions when an abnormality first occurs in a vehicle platooning ECU in the pneumatic brake system shown in Fig. 3.
[Fig. 7]

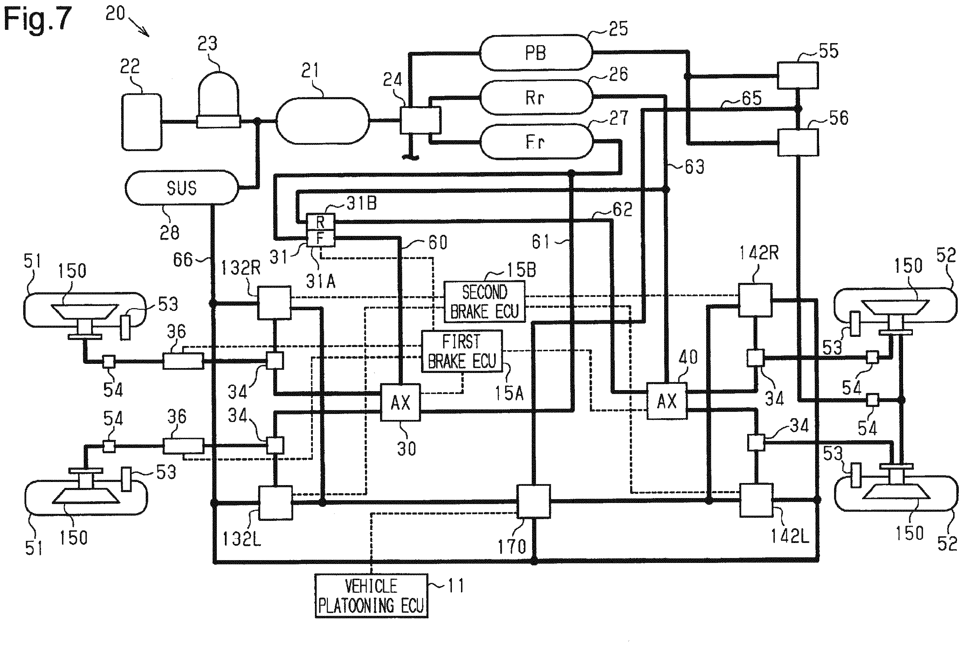

   Fig. 7 is a schematic view showing an overall configuration of a pneumatic brake system according to a second embodiment.
[Fig. 8]

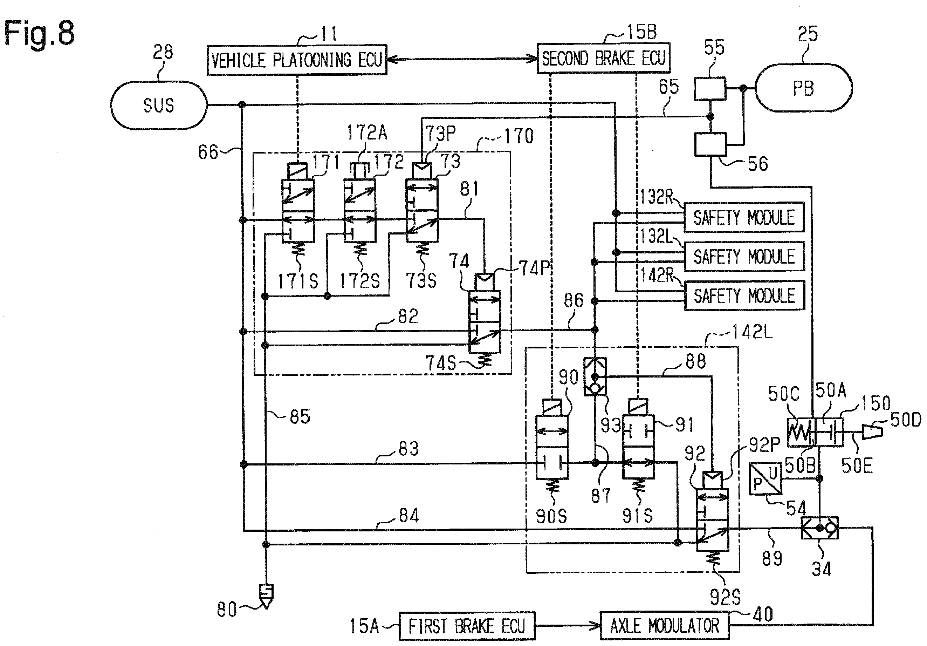

   Fig. 8 is a circuit diagram of a pneumatic circuit showing, in detail, a part of the pneumatic brake system shown in Fig. 7 in a state where a parking brake is actuated.
[Fig. 9]

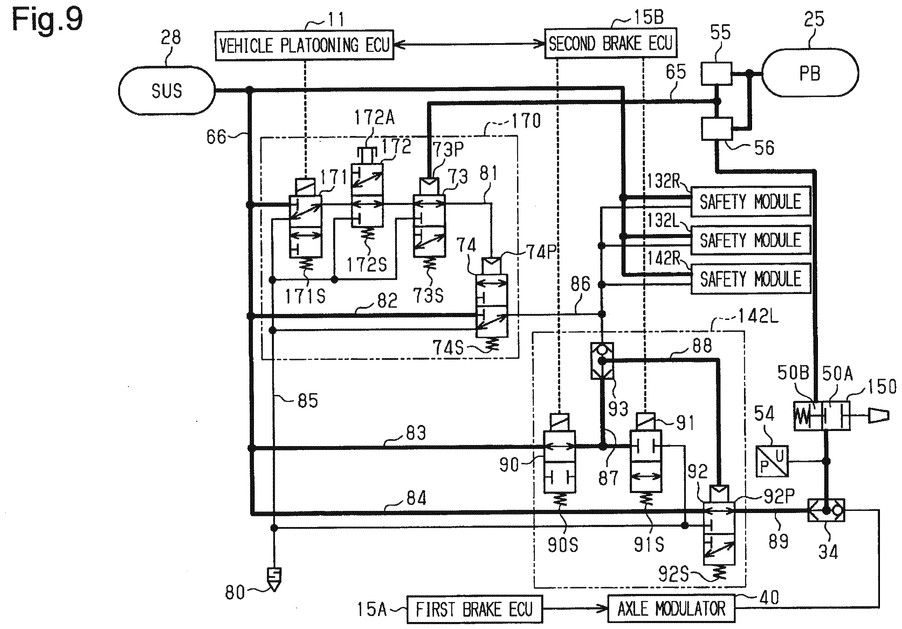

   Fig. 9 is a circuit diagram of a pneumatic circuit of the pneumatic brake system shown in Fig. 7 in a state of deceleration in a deceleration travel mode.
[Fig. 10]

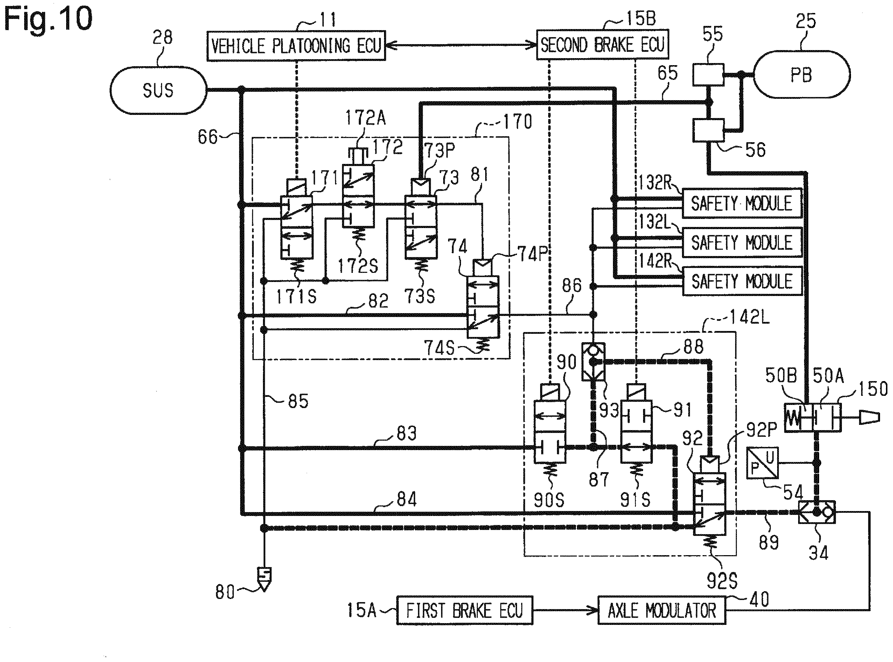

   Fig. 10 is a circuit diagram of a pneumatic circuit of the pneumatic brake system shown in Fig. 7 in a state of non-deceleration in the deceleration travel mode.
[Fig. 11]

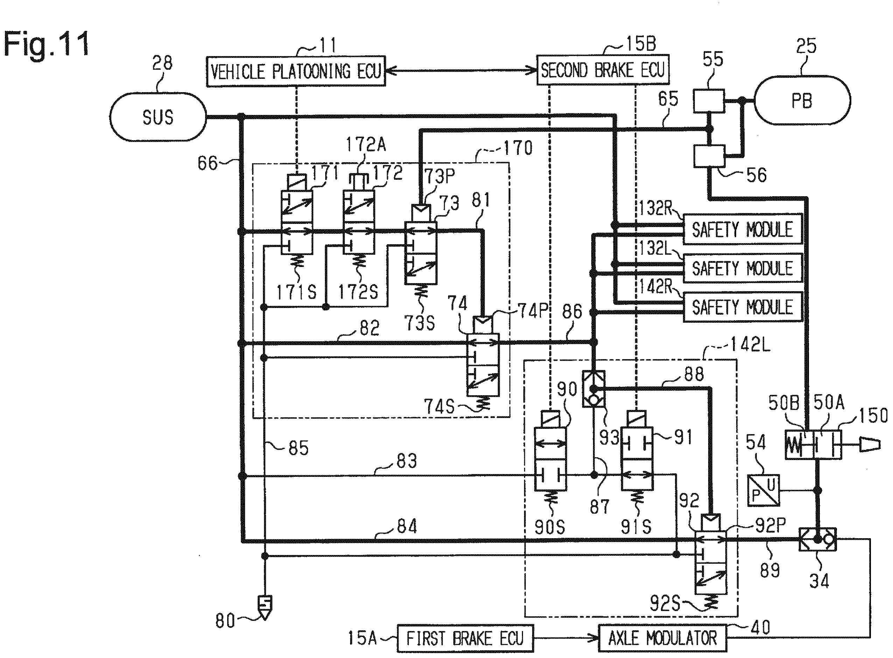

   Fig. 11 is a circuit diagram of a pneumatic circuit of the pneumatic brake system shown in Fig. 7 in a state of a forced brake mode.
[Fig. 12]

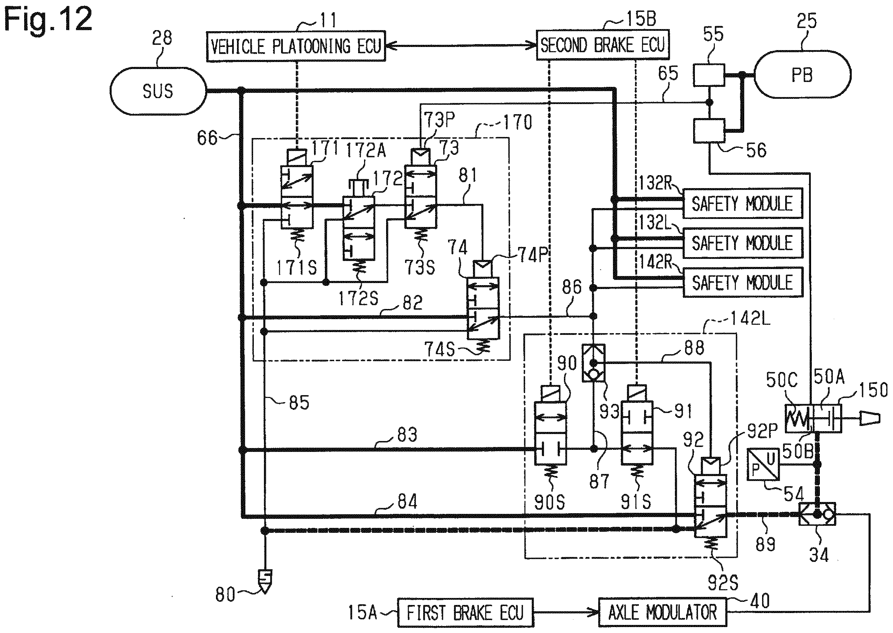

   Fig. 12 is a circuit diagram of a pneumatic circuit of the pneumatic brake system shown in Fig. 7 in a state of a restart mode.
[Fig. 13]

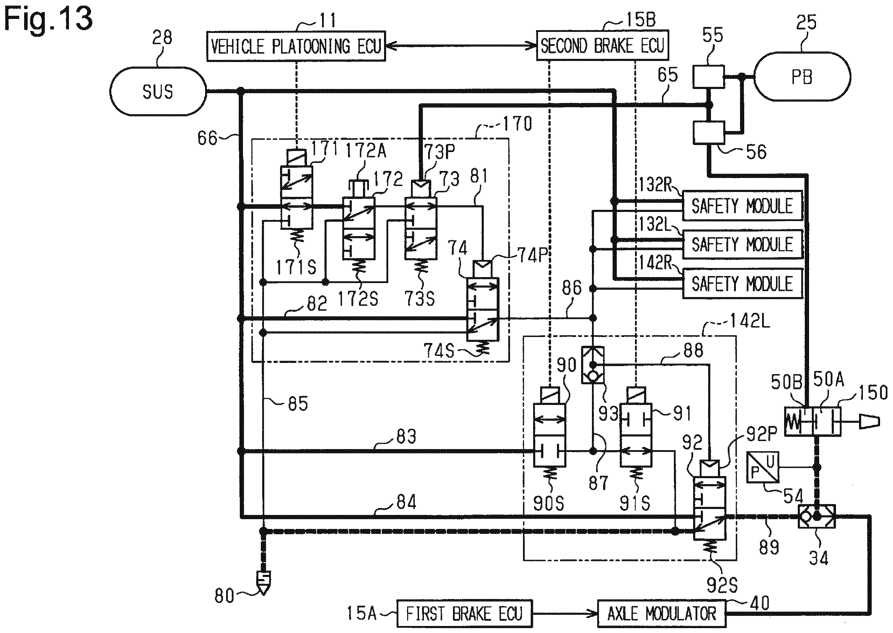

   Fig. 13 is a circuit diagram of a pneumatic circuit of the pneumatic brake system shown in Fig. 7 in a state of performing manned driving in the restart mode.

### MODES FOR CARRYING OUT THE INVENTION

Hereinafter, an embodiment of a vehicle equipped with a pneumatic brake system will be described.

Vehicle platooning will be described with reference to Fig. 1. In this case, vehicles 100 that form a platoon are trucks (also referred to as cargo vehicles) which are freight vehicles in which a flatbed is integrally provided with a vehicle. The platoon is formed when traveling a prescribed section and is constituted by a lead vehicle 100a and following vehicles 100b which travel behind the lead vehicle 100a. The lead vehicle 100a is driven by a driver (manned driving). With the following vehicles 100b, automated driving is performed in an unmanned state (driverless driving) or automated driving is performed with an observer on board. Each observer monitors vehicle behavior and basically does not drive. The lead vehicle 100a and each following vehicle 100b travel while keeping an inter-vehicular distance set in advance. The vehicles 100 forming the platoon transmit information such as speed every several milliseconds to several tens of milliseconds to the other vehicles 100 traveling there behind. Based on the received information such as speed, the vehicle 100 accelerates or decelerates so that the inter-vehicular distance to the preceding vehicle 100 equals a prescribed distance. In addition, the following vehicles 100b may be driven by a driver as necessary when, for example, traveling a road that is outside of the prescribed section in which vehicle platooning is performed. It should be noted that, while the platoon is formed by three vehicles 100 in Fig. 1, the number of the plurality of vehicles 100 forming the platoon may be other than three.

A configuration of a vehicle platooning control system 10 of the vehicle 100 will be described with reference to Fig. 2. It is assumed that the lead vehicle 100a and the following vehicles 100b are mounted with the same vehicle platooning control system 10.

As shown in Fig. 2, the vehicle platooning control system 10 of the vehicle 100 includes a vehicle platooning ECU (Electronic Control Unit) 11 which performs various controls for vehicle platooning. Specifically, the vehicle platooning control system 10 includes a first vehicle platooning ECU 11A as a main control device and a second vehicle platooning ECU 11B as a main control device. Various systems of the vehicles 100 are controlled to perform vehicle platooning based on a command from any of the first vehicle platooning ECU 11A and the second vehicle platooning ECU 11B. For example, even when an abnormality occurs in the first vehicle platooning ECU 11A, the second vehicle platooning ECU 11B controls the vehicle 100. In other words, the vehicle platooning ECU 11 is duplexed by the first vehicle platooning ECU 11A and the second vehicle platooning ECU 11B. Hereinafter, when describing the first vehicle platooning ECU 11A and the second vehicle platooning ECU 11B without distinction, the vehicle platooning ECU 11 will be simply described.

The vehicle platooning ECU 11 of the lead vehicle 100a and the vehicle platooning ECU 11 of the following vehicles 100b transmit and receive various types of information via radio communication. The lead vehicle 100a actuates a brake by a braking operation performed by the driver, and the following vehicles 100b actuate a brake so as to follow an immediately previous vehicle 100 when the immediately previous vehicle 100 decelerates. In other words, the following vehicles 100b are equipped with a pneumatic brake system capable of actuating a brake so as to follow the immediately previous vehicle 100. Although the lead vehicle 100a need not be equipped with a pneumatic brake system such as that of the following vehicles 100b because the lead vehicle 100a is a vehicle that is driven by the driver, the lead vehicle 100a may be equipped with a pneumatic brake system with a same configuration. In the present embodiment, it is assumed that the pneumatic brake system of the lead vehicle 100a and the pneumatic brake system of the following vehicles 100b share the same configuration. In addition, while the platoon is formed by three vehicles 100 in Fig. 1, the number of the plurality of vehicles 100 forming the platoon may be other than three.

As shown in Fig. 2, in addition to the vehicle platooning ECU 11, the vehicle platooning control system 10 includes a first brake ECU 15A as a main brake control device and a second brake ECU 15B as a safety brake control device. The first brake ECU 15A is an ECU which has a higher priority than the second brake ECU 15B and actuates and releases a brake by controlling an actuator constituting the vehicle platooning control system 10 during normal time when no abnormality has occurred in the first brake ECU 15A itself. The pneumatic brake system actuates a service brake (a regular brake or a foot brake) of which a braking force is variable due to pneumatic pressure and a parking brake which applies a prescribed braking force to a wheel due to a biasing force of a spring. The second brake ECU 15B controls the vehicle platooning control system 10 in an emergency when an abnormality has occurred in the first brake ECU 15A. In addition to a state where an abnormality occurs in the first brake ECU 15A, emergencies include states where an abnormality occurs in both the first vehicle platooning ECU 11A and the second vehicle platooning ECU 11B and where an abnormality occurs in all of the first brake ECU 15A, the first vehicle platooning ECU 11A, and the second vehicle platooning ECU 11B.

The first vehicle platooning ECU 11A, the second vehicle platooning ECU 11B, the first brake ECU 15A, and the second brake ECU 15B are connected to an on-board network 19. In addition, a vehicle speed sensor 53 is connected to the on-board network 19. Hereinafter, when the first vehicle platooning ECU 11A, the second vehicle platooning ECU 11B, the first brake ECU 15A, and the second brake ECU 15B are simply described as nodes connected to the on-board network 19 without distinction, these ECUs will be simply described as the ECU. For example, while the on-board network is a CAN (Controller Area Network), other on-board networks such as FlexRay (registered trademark) and Ethernet (registered trademark) may be used instead. A communication control part (not illustrated) which detects a communication error and the like is connected to the on-board network 19. Each ECU attaches its own ID to a prescribed communication message and sends the communication message to the on-board network 19, and acquires a communication message to be acquired from the on-board network 19.

Next, a general configuration of a pneumatic brake system 20 of the vehicle 100 according to the first embodiment will be described with reference to Fig. 3. The pneumatic brake system 20 actuates a service brake of which a braking force is variable due to pneumatic pressure and a parking brake which applies a prescribed braking force to a wheel due to a biasing force of a spring.

Next, as shown in Fig. 3, the pneumatic brake system 20 supplies a brake chamber 50 as a brake mechanism with air stored in an air storage tank 21 or another tank. While only one pair of front wheels 51 and one pair of rear wheels 52 which are drive wheels are illustrated in Fig. 3, the number of the front wheels 51 and the number of the rear wheels 52 are not particularly limited. For example, the vehicle 100 may be provided with one pair of front wheels 51 and two pairs of rear wheels 52. The brake chamber 50 is provided on each wheel. The brake chamber 50 includes a service brake air storage chamber and a parking brake air storage chamber. In addition, the brake chamber 50 is provided with a spring which stops a rotation of the wheel by applying a biasing force thereto. The service brake is actuated when air is supplied to the service brake air storage chamber, and a braking force thereof increases as an amount of supplied air increases. The service brake is released when air is discharged from the service brake air storage chamber. On the other hand, when air is supplied in a prescribed amount or more to the parking brake air storage chamber, the biasing force of the spring is released, and when air is discharged from the parking brake air storage chamber, the biasing force of the spring is applied to the wheel.

In addition, the front wheels 51 and the rear wheels 52 are provided with the vehicle speed sensor 53 which detects a rotational speed of a wheel. The vehicle speed sensor 53 outputs a vehicle speed pulse signal to the on-board network 19 (refer to Fig. 2). Furthermore, a supply path that connects to the service brake air storage chamber of the brake chamber 50 is provided with a pressure sensor 54 which detects pressure in the supply path.

The air storage tank 21 which is an air supply source stores air having been compressed by a compressor 22 and dried by an air dryer 23 that includes a desiccant. The air storage tank 21 is connected to a protection valve 24 via a pipe. The protection valve 24 distributes air supplied from the air storage tank 21 to a parking brake tank 25, a rear wheel brake tank 26, and a front wheel brake tank 27.

The front wheel brake tank 27 is connected to an axle modulator 30 via a brake valve 31. The axle modulator 30 controls supply and discharge of air to and from the brake chamber 50 provided in the front wheels 51. The brake valve 31 includes a front wheel control part 31A connected to the front wheel brake tank 27 and a rear wheel control part 31B connected to the rear wheel brake tank 26, and is controlled by the first brake ECU 15A. The axle modulator 30 is controlled by the first brake ECU 15A.

During manned driving in which the vehicle 100 is driven by a driver, based on a position detection signal inputted from a sensor that detects a position of a brake pedal (not illustrated) operated by the driver, the first brake ECU 15A controls the brake valve 31 and supplies air to the axle modulator 30. During driverless driving of the vehicle 100, based on information such as deceleration information transmitted from, for example, a preceding vehicle 100 such as the lead vehicle, the first brake ECU 15A controls the brake valve 31 and supplies air to the axle modulator 30.

The axle modulator 30 includes a first input port to be connected to a signal supply path 60 communicating with the front wheel control part 31A of the brake valve 31 and a second input port to be connected to a supply path 61 communicating with the front wheel brake tank 27. In addition, the axle modulator 30 includes an output port to be connected to a safety module 32L provided so as to correspond to the left-side front wheel 51 and an output port to be connected to a safety module 32R provided so as to correspond to the right-side front wheel 51. When a pneumatic signal sent from the front wheel control part 31A of the brake valve 31 is input to the first input port, the axle modulator 30 distributes air supplied from the front wheel brake tank 27 to the second input port to the safety modules 32L and 32R, respectively.

Since the safety module 32L of the left-side front wheel and the safety module 32R of the right-side front wheel share a same configuration, only the safety module 32L of the left-side front wheel will be described. The safety module 32L includes a safety air supplier 33 and a shuttle valve 34. The safety air supplier 33 includes a solenoid valve (not illustrated) controlled by the second brake ECU 15B. The safety air supplier 33 is connected to a suspension tank 28 provided in an air suspension system (a pneumatically-driven suspension system) of the vehicle 100. In addition, the safety air supplier 33 is connected to the brake chamber 50 via the shuttle valve 34. The suspension tank 28 stores air having been supplied from the compressor 22 via the air dryer 23. In an emergency in which an abnormality occurs in the first brake ECU 15A or the like, the second brake ECU 15B controls the safety air supplier 33 and supplies air to the brake chamber 50.

The shuttle valve 34 connected to the safety air supplier 33 and the axle modulator 30 allows a flow of air to the brake chamber 50 from one of the safety air supplier 33 and the axle modulator 30 that has higher pressure. Therefore, even when a failure other than an abnormality of the electric system occurs, such as a state where an air leak or a mechanical abnormality is present between the air storage tank 21 and the axle modulator 30 or a state where a leak has occurred in a pipe to the axle modulator 30, since each of the safety air supplier 33 and the axle modulator 30 has high pressure, air is supplied to the brake chamber 50 from the member that has higher pressure. In addition, the shuttle valve 34 is connected to an ABS (Antilock Brake System) valve 36. The ABS valve 36 constitutes an antilock brake system of the two wheels of a front shaft. The ABS valve 36 is controlled by the first brake ECU 15A. It should be noted that an ABS function may be included in at least one of the axle modulator 30 and the safety air supplier 33.

On the other hand, the rear wheel brake tank 26 is connected to an axle modulator 40. The axle modulator 40 controls supply and discharge of air to and from the brake chamber 50 provided in the rear wheels 52. The axle modulator 40 is controlled by the first brake ECU 15A. The axle modulator 40 includes a first input port to be connected to a signal supply path 62 communicating with the rear wheel control part 31B of the brake valve 31, and a second input port to be connected to a supply path 63 communicating with the rear wheel brake tank 26. In addition, the axle modulator 40 includes an output port to be connected to a safety module 42L provided in the left-side rear wheel 52, and an output port to be connected to a safety module 42R provided in the right-side rear wheel 52. When a pneumatic signal sent from the rear wheel control part 31B of the brake valve 31 is inputted to the first input port connected to the signal supply path 62, the axle modulator 40 distributes air supplied from the rear wheel brake tank 26 to the second input port to the safety modules 42L and 42R, respectively.

The rear wheel brake tank 26 is connected to the axle modulator 40 via the brake valve 31. During manned driving in which the vehicle 100 is driven by a driver, based on a position detection signal inputted from a sensor that detects a position of a brake pedal (not illustrated) operated by the driver, the first brake ECU 15A controls the brake valve 31. During driverless driving of the vehicle 100, based on information such as deceleration information transmitted from the lead vehicle or the like, the first brake ECU 15A controls the brake valve 31 and supplies air to the axle modulator 40.

Since the safety module 42L of the left-side rear wheel and the safety module 42R of the right-side rear wheel share a same configuration, only the left-side safety module 42L will be described. It should be noted that the rear wheel safety modules 42L and 42R only differ from the front wheel safety modules 32L and 32R in states of connection to tanks and the like and share a similar configuration to the front wheel safety modules 32L and 32R. The safety module 42L includes the safety air supplier 33 controlled by a deceleration command from the second brake ECU 15B and the shuttle valve 34. The safety air supplier 33 shares a same configuration as the safety air supplier 33 provided with respect to the front wheels 51 and includes a solenoid valve controlled by the second brake ECU 15B. The safety air supplier 33 of the rear wheels 52 is also connected to the suspension tank 28.

In addition, the parking brake tank 25 is connected to a parking brake control valve 55 and a parking brake relay valve 56. The parking brake control valve 55 is controlled by the first brake ECU 15A or the like and outputs a pneumatic signal to the parking brake relay valve 56. When a pneumatic signal is inputted from the parking brake control valve 55, the parking brake relay valve 56 opens and causes the parking brake tank 25 and the parking brake air storage chamber of the brake chamber 50 to communicate with each other. As a result, air is supplied to the parking brake air storage chamber and the parking brake is released. Alternatively, the parking brake relay valve 56 may be configured as a solenoid valve to be controlled by the first brake ECU 15A or the like.

A signal supply path 65 of a safety brake valve 71 as a forced brake solenoid valve is connected between the parking brake control valve 55 and the parking brake relay valve 56. The safety brake valve 71 constitutes a forced brake module 70 together with a load sensing valve 72 (a regulating valve) as a valve device. At least one forced brake module 70 is provided in one vehicle 100. In the present practical example, one forced brake module 70 is provided. In addition, the forced brake module 70 is controlled by the vehicle platooning ECU 11. The safety brake valve 71 is a solenoid valve that is controlled by any of the first vehicle platooning ECU 11A and the second vehicle platooning ECU 11B. In other words, the safety brake valve 71 can be controlled by any of the first vehicle platooning ECU 11A and the second vehicle platooning ECU 11B.

The load sensing valve 72 is provided in series in the supply path that connects the safety brake valve 71 to the safety modules 42L and 42R. The load sensing valve 72 is capable of regulating an amount of air to be supplied to the service brake air storage chamber of the brake chamber 50. The load sensing valve 72 is connected to the air suspension system. Pressure at a connection port of the load sensing valve 72 to the air suspension system is the same as the pressure in the air suspension system. When a load due to cargo of the vehicle 100 is large, the pressure at the connection port increases. When the pressure at the connection port of the load sensing valve 72 exceeds a prescribed value, the load sensing valve 72 increases an amount of air supplied to the safety modules 42L and 42R of the rear wheels 52 which are drive wheels. Alternatively, for example, when the pressure at the connection port can be adjusted in accordance with a load due to cargo or the like by using a component other than the load sensing valve 72, the load sensing valve 72 may be omitted.

The safety brake valve 71 includes a signal input port to be connected to the signal supply path 65, two connection ports to be connected to the safety modules 32L and 32R of the front wheels 51 and the safety modules 42L and 42R of the rear wheels 52, and an input port to be connected to a tank-side supply path 66 to which air is supplied from the suspension tank 28 as an air supply source. In a state where no abnormality has occurred or, in other words, during normal time, the safety brake valve 71 is energized by any of the first vehicle platooning ECU 11A and the second vehicle platooning ECU 11B and cuts off supply of air to the safety modules 32L, 32R, 42L, and 42R. In addition, in a prescribed state where an abnormality has occurred, the safety brake valve 71 is switched to a non-energized state and supplies air to the safety modules 32L, 32R, 42L, and 42R.

When air is discharged from the parking brake air storage chamber, the biasing force of the spring is applied to the wheel and the parking brake enters an actuated state. In that state, a pneumatic signal is not inputted to the signal input port of the safety brake valve 71. When a prescribed amount of air is introduced into the parking brake air storage chamber, the parking brake enters a released state. In that state, a pneumatic signal is inputted to the signal input port of the safety brake valve 71 via the signal supply path 65. Once a pneumatic signal is inputted to the signal input port, the safety brake valve 71 can supply air stored in the suspension tank 28 to the safety modules 32L, 32R, 42L, and 42R. At this point, since pressure of the safety brake valve 71 becomes higher than pressure of the axle modulators 30 and 40, the shuttle valve 34 allows a flow of air from the safety brake valve 71 to the brake chamber 50.

In addition, the second brake ECU 15B acquires a pressure detection signal of the pressure sensor 54. Based on the pressure detection signal, the second brake ECU 15B learns a relationship between pressure and deceleration. Deceleration is calculated by the second brake ECU 15B based on a vehicle speed signal acquired from the vehicle speed sensor 53 via the on-board network 19. Alternatively, the second brake ECU 15B acquires deceleration calculated by the vehicle platooning ECU 11 from the on-board network 19. The second brake ECU 15B controls the safety modules 32L, 32R, 42L, and 42R based on a deceleration request of the vehicle platooning ECU 11 and a learned result so that the vehicle 100 decelerates to a prescribed speed. Besides the relationship between deceleration and pressure, the second brake ECU 15B may learn a relationship between speed and pressure.

Next, an operation of the second brake ECU 15B will be described together with a procedure thereof with reference to Fig. 4. The second brake ECU 15B controls braking in a prescribed state where an abnormality has occurred in the first brake ECU 15A, but otherwise does not interfere with the brake control by the first brake ECU 15A. In addition, it is assumed that an abnormality has not occurred in the second brake ECU 15B. It should be noted that the following procedure is simply an example and control according to procedures other than the following procedure may be performed.

For example, when an ignition switch is turned on, the second brake ECU 15B determines whether or not an abnormality has occurred is found in any of the ECUs connected to the on-board network 19 or a prescribed ECU among the ECUs connected to the on-board network 19 (step S1). Each ECU is capable of determining, based on the fact that a prescribed communication message has been received or the fact that the prescribed communication message has not been received via the on-board network 19, a presence or absence of an abnormality in an ECU that is a transmission source of the communication message. Alternatively, the second brake ECU 15B determines a presence or absence of an abnormality in an ECU based on a message or the like transmitted when a communication control part which controls communication of the on-board network 19 detects an error. Alternatively, the second brake ECU 15B may determine a presence or absence of an abnormality in an ECU using other methods.

When the second brake ECU 15B determines that an abnormality has not occurred in any of the ECUs to be determined (step S1: NO), the second brake ECU 15B repetitively performs the determination of a presence or absence of an abnormality (step S1). On the other hand, when the second brake ECU 15B determines that an abnormality has occurred in any of the ECUs to be determined (step S1: YES), the second brake ECU 15B determines whether or not the ECU in which the abnormality has occurred is the first brake ECU 15A (step S2).

When the second brake ECU 15B determines that an abnormality has occurred in the first brake ECU 15A (step S2: YES), the second brake ECU 15B determines whether or not an abnormality has occurred in both of the vehicle platooning ECUs 11 (step S3). When an abnormality has occurred in both of the vehicle platooning ECUs 11 (step S3: YES), since energization by the vehicle platooning ECUs 11 is not performed and the safety brake valve 71 enters the non-energized state, the forced brake is actuated (step S4). In other words, the air stored in the suspension tank 28 is supplied to the safety modules 32L, 32R, 42L, and 42R via the safety brake valve 71. Accordingly, since the pressure of the safety brake valve 71 is higher than the pressure of the axle modulators 30 and 40, the shuttle valve 34 allows a flow of air from the safety brake valve 71 to the brake chamber 50.

In step S3, when the second brake ECU 15B determines that an abnormality has not occurred in both of the vehicle platooning ECUs 11 or an abnormality has occurred in one of the vehicle platooning ECUs 11 (step S3: NO), the second brake ECU 15B performs brake control for deceleration travel based on a deceleration request from the vehicle platooning ECU 11 (step S5). Specifically, the second brake ECU 15B controls the solenoid valves of the safety modules 32L, 32R, 42L, and 42R. In addition, the second brake ECU 15B supplies air to the brake chamber 50 from the suspension tank 28 via the safety modules 32L, 32R, 42L, and 42R. In that state, the second brake ECU 15B acquires a pressure value detected by the pressure sensor 54. In addition, the second brake ECU 15B regulates a supply amount of air so that the speed of the vehicle 100 equals a prescribed value based on the acquired pressure value and the learned result and using a deceleration or the like instructed from the vehicle platooning ECU 11 as a target. Accordingly, the vehicle 100 decelerates to a prescribed speed within a range between, for example, 20 km per hour or higher and 40 km per hour or lower and travels maintaining the speed.

On the other hand, in step S2, when the second brake ECU 15B determines that an abnormality has not occurred in the first brake ECU 15A (step S2: NO), the second brake ECU 15B determines whether or not an abnormality has occurred in both of the vehicle platooning ECUs 11 (step S6). When the second brake ECU 15B determines that an abnormality has occurred in both of the vehicle platooning ECUs 11 (step S6: YES), since the safety brake valve 71 enters the non-energized state, the forced brake is mechanically actuated (step S7).

In step S6, when the second brake ECU 15B determines that an abnormality has occurred in the first vehicle platooning ECU 11A or the second vehicle platooning ECU 11B (step S6: NO), since it has already been determined in step S1 that an abnormality has occurred in any of the ECUs and in step S2 that an abnormality has not occurred in the first brake ECU 15A, the first brake ECU 15A and one of the vehicle platooning ECUs 11 are operating normally. In this case, the first brake ECU 15A performs normal brake control (step S8).

Even after any of forced braking (step S4 and step S7), deceleration travel (step S5), and brake control by the first brake ECU 15A (step S8) is performed, the second brake ECU 15B repetitively performs abnormality determination (step S1 to step S8) as long as the ignition switch is ON. While abnormality determination is repetitively performed in this manner, for example, when an abnormality initially occurs only in the first vehicle platooning ECU 11A and an abnormality subsequently occurs in the first brake ECU 15A, a transition is made from brake control by the first brake ECU 15A to deceleration travel. In other words, brake control changes stepwise in accordance with a level (a degree) of abnormality of the pneumatic brake system 20.

Next, state transitions of brake control in accordance with a level of abnormality will be described with reference to Figs. 5 and 6.

Fig. 5(a) shows state transitions in a case where an abnormality initially occurs in the first brake ECU 15A. When there is no abnormality in any of the ECUs, brake control by the first brake ECU 15A is performed (state 200). In this state, when an abnormality initially occurs in the first brake ECU 15A, the second brake ECU 15B detects the abnormality of the first brake ECU 15A to perform deceleration travel (state 201).

When an abnormality occurs in the second brake ECU 15B in a state where deceleration travel is maintained, the first vehicle platooning ECU 11A or the second vehicle platooning ECU 11B detects the abnormality of the first brake ECU 15A and the second brake ECU 15B, changes the safety brake valve 71 to a non-energized state, and actuates the forced brake (state 203).

When an abnormality occurs in any one of the vehicle platooning ECUs 11 in a state where deceleration travel is maintained (state 201), the second brake ECU 15B detects the abnormality of the first brake ECU 15A and one of the vehicle platooning ECUs 11 and performs deceleration travel (state 204). When an abnormality further occurs in the other vehicle platooning ECU 11 which had been operating normally, since the safety brake valve 71 enters the non-energized state, the forced brake is actuated (state 205).

When abnormalities simultaneously occur in both vehicle platooning ECUs 11 in a state where deceleration travel is maintained (state 201), since the safety brake valve 71 enters the non-energized state, the forced brake is actuated (state 206).

When both of the vehicle platooning ECUs 11 fail, the forced brake is actuated (for example, the state 206) timely in accordance with the vehicles 100 in which both vehicle platooning ECUs 11 had failed. On the other hand, with respect to actuation (for example, the state 203) of the forced brake when one of the vehicle platooning ECUs 11 fails, since the normal vehicle platooning ECU 11 is able to adjust a brake timing of the vehicles constituting the vehicle platooning, a collision with following vehicles can be readily avoided.

Fig. 5(b) shows state transitions in a case where an abnormality initially occurs in the second brake ECU 15B. When there is no abnormality in either ECU, brake control by the first brake ECU 15A is performed (state 200). In this state, when an abnormality initially occurs in the second brake ECU 15B, since the second brake ECU 15B does not interfere with the brake control of the first brake ECU 15A, the first brake ECU 15A performs normal brake control (state 210).

When an abnormality occurs in the first brake ECU 15A in a state where normal brake control is maintained (state 210), the first vehicle platooning ECU 11A, the second vehicle platooning ECU 11B, or both vehicle platooning ECUs 11 detect the abnormality of the first brake ECU 15A and the second brake ECU 15B, places the safety brake valve 71 in a non-energized state, and actuates the forced brake (state 211).

When an abnormality occurs in any one of the vehicle platooning ECUs 11 in a state where normal brake control is maintained (state 210), the first brake ECU 15A is capable of brake control to perform normal brake control (state 212). When an abnormality next occurs in the first brake ECU 15A, the vehicle platooning ECU 11 which operates normally changes the safety brake valve 71 to a non-energized state and actuates the forced brake (state 213).

When abnormalities simultaneously occur in both vehicle platooning ECUs 11 in a state where normal brake control is maintained (state 210), since the safety brake valve 71 enters the non-energized state, the forced brake is mechanically actuated (state 214).

Fig. 6 shows state transitions in a case where an abnormality initially occurs in any one of the first vehicle platooning ECU 11A and the second vehicle platooning ECU 11B. When there is no abnormality in either ECU, brake control by the first brake ECU 15A is performed (state 200). In this state, when an abnormality initially occurs in one of the vehicle platooning ECUs 11, since brake control by the first brake ECU 15A can be performed, normal brake control is performed (state 220).

When an abnormality occurs in the first brake ECU 15A in a state where normal brake control is maintained (state 220), the second brake ECU 15B detects the abnormality of the first brake ECU 15A and performs deceleration travel (state 221). When an abnormality occurs in the other vehicle platooning ECU 11, which is, both vehicle platooning ECUs 11 are in an abnormal state in a state where deceleration travel is maintained (state 221), since the safety brake valve 71 enters the non-energized state, the forced brake is mechanically actuated (state 222). In addition, when an abnormality occurs in the second brake ECU 15B in a state where deceleration travel is maintained (state 221), the normal vehicle platooning ECU 11 detects the abnormality of the first brake ECU 15A and the second brake ECU 15B, changes the safety brake valve 71 to a non-energized state, and actuates the forced brake (state 223).

When an abnormality occurs in the second brake ECU 15B in a state where normal brake control is maintained (state 220), since the first brake ECU 15A is capable of brake control to perform normal brake control (state 224). Next, when an abnormality also occurs in the vehicle platooning ECU 11 which had been operating normally, since the safety brake valve 71 enters the non-energized state, the forced brake is mechanically actuated (state 225). When an abnormality occurs in the first brake ECU 15A after abnormalities had occurred in one of the vehicle platooning ECUs 11 and the second brake ECU 15B, the vehicle platooning ECU 11 which had been operating normally changes the safety brake valve 71 to a non-energized state and actuates the forced brake (state 226).

When abnormalities simultaneously occur in vehicle platooning ECUs 11 which had been operating normally in a state where normal brake control is maintained (state 220), since the safety brake valve 71 enters the non-energized state, the forced brake is mechanically actuated (state 227).

As described above, according to the first embodiment, the following advantages are gained.
(1) The shuttle valve 34 supplies air to the brake chamber 50 from one of the safety air supplier 33 and another air supply circuit such as the axle modulators 30 and 40 that has higher pressure. Therefore, when an abnormality occurs in one or both of the safety air supplier 33 and the other air supply circuit, or when an abnormality occurs in the second brake ECU 15B, air can be supplied to the brake chamber 50 such that brakes can be actuated. Therefore, the redundancy of the pneumatic brake system 20 can be increased. In addition, since the safety air supplier 33 and the shuttle valve 34 are provided on each wheel, responsiveness of brake control in an emergency can be improved.
(2) The safety brake valve 71 that is controlled by the vehicle platooning ECUs 11 supplies, in a non-energized state, air from the suspension tank 28 to the brake chamber 50. In addition, when air is supplied from the safety brake valve 71k, the shuttle valve 34 allows supply of air from the safety brake valve 71 to the brake chamber 50. Therefore, even when an abnormality occurs in the vehicle platooning ECUs 11, brakes can be forcibly actuated.
(3) Since the second brake ECU 15B is controlled based on a braking request from the vehicle platooning ECUs 11, travel of the vehicles 100 is enabled even when an abnormality occurs in the first brake ECU 15A. Therefore, the redundancy of the vehicle platooning control system 10 can be increased.
(4) Even when an abnormality has not occurred in the second brake ECU 15B, brakes are forcibly actuated when abnormalities occur in both the first brake ECU 15A and the vehicle platooning ECUs 11. Therefore, the redundancy of the vehicle platooning control syst10 can be increased.
(5) Since an amount of air supplied to a brake chamber 150 is changed by the load sensing valve 72 in accordance with a payload of the vehicle 100, a braking force can be increased when the payload is large. In addition, since the load sensing valve 72 communicates with the air suspension system and changes the supply amount of air in accordance with pneumatic pressure of the air suspension system, a braking force in accordance with the payload can be mechanically changed even when an abnormality occurs in the electrical system including the ECUs. Furthermore, the braking force can be adjusted so as to avoid colliding with a preceding vehicle.

Next, a general configuration of a pneumatic brake system 20 according to a second embodiment will be described with reference to Fig. 7. The pneumatic brake system 20 supplies a brake chamber 150 as a brake mechanism with air stored in an air storage tank 21 or other tanks. The brake chamber 150 is provided on each wheel. In Fig. 7, solid lines connecting tanks and actuators represent passages of air and dashed lines represent a state where ECUs and actuators are electrically connected.

A front wheel brake tank 27 is connected to an axle modulator 30 as a modulator via a brake valve 31. The brake valve 31 includes a front wheel control part 31A connected to the front wheel brake tank 27 and a rear wheel control part 31B connected to a rear wheel brake tank 26. The front wheel control part 31A is connected to the front wheel axle modulator 30. In addition, the brake valve 31 supplies air from the front wheel control part 31A to the axle modulator 30 under control of a first brake ECU 15A. The axle modulator 30 controls supply and discharge of air to and from the brake chambers 150 provided in front wheels 51.

The axle modulator 30 is connected to a safety module 132L provided so as to correspond to the left-side front wheel 51 and a safety module 132R provided so as to correspond to the right-side front wheel 51. When a pneumatic signal sent from the front wheel control part 31A of the brake valve 31 via a signal supply path 60 is inputted, the axle modulator 30 distributes air directly supplied from the front wheel brake tank 27 via a supply path 61 to the safety modules 132L and 132R, respectively.

Since the safety module 132L of the left-side front wheel and the safety module 132R of the right-side front wheel share a same configuration, only the safety module 132L of the left-side front wheel will be described. The safety module 132L is connected to the brake chamber 150 via a shuttle valve 34. The safety module 132L is connected to a suspension tank 28 as an air supply source provided in a pneumatic suspension system (a pneumatically-driven suspension system) of a vehicle 100. The suspension tank 28 stores air having been supplied from a compressor 22 via an air dryer 23. Alternatively, the safety modules 132L and 132R may be connected to tanks other than the suspension tank 28. For example, the safety modules 132L and 132R may be connected to a parking brake tank 25, a rear wheel brake tank 26, and a front wheel brake tank 27.

The shuttle valve 34 is connected to the safety module 132L and the axle modulator 30, and allows a flow of air to the brake chamber 150 from one of the safety module 132L and the axle modulator 30 that has higher pressure. In addition, an ABS (Antilock Brake System) valve 36 is provided between the shuttle valve 34 and the brake chamber 150. The ABS valve 36 constitutes an antilock brake system of a front shaft. The ABS valve 36 is controlled by the first brake ECU 15A. It should be noted that an ABS function may be included in the axle modulator 30.

The brake chambers 150 of the front wheels 51 include a service brake air storage chamber. The shuttle valve 34 is connected to the service brake air storage chamber via the ABS valve 36. The service brake is actuated when air is supplied to the service brake air storage chamber, and a braking force increases as an amount of supplied air increases. The service brake is released when air is discharged from the service brake air storage chamber.

In addition, the front wheels 51 and rear wheels 52 are provided with vehicle speed sensors 53 which detect a rotational speed of the wheels. Furthermore, a pneumatic line that connects to the service brake air storage chamber of each brake chamber 150 is provided with a pressure sensor 54 which detects pressure in the supply path.

On the other hand, the rear wheel brake tank 26 is connected to an axle modulator 40 as a modulator via the rear wheel control part 31B of the brake valve 31. The brake valve 31 supplies air from the rear wheel control part 31B to the axle modulator 40 under control of the first brake ECU 15A. The axle modulator 40 controls supply and discharge of air to and from the brake chambers 150 provided in the rear wheels 52. The axle modulator 40 is connected to a signal supply path 62 which communicates with the rear wheel control part 31B of the brake valve 31 and a supply path 63 which directly communicates with the rear wheel brake tank 26. In addition, the axle modulator 40 is connected to a safety module 142L provided in the left-side rear wheel 52 and a safety module 142R provided in the right-side rear wheel 52. When a pneumatic signal sent from the rear wheel control part 31B of the brake valve 31 via the signal supply path 62 is inputted, the axle modulator 40 distributes air supplied from the rear wheel brake tank 26 via the supply path 63 to the safety modules 142L and 142R, respectively.

During manned driving when the vehicle 100 is driven by a driver, based on a position detection signal inputted from a sensor that detects a position of a brake pedal (not illustrated) operated by the driver, the first brake ECU 15A controls the brake valve 31 and supplies air to the axle modulator 40. In addition, during driverless driving of the vehicle 100, based on information such as speed transmitted from a preceding vehicle 100 or the like, the first brake ECU 15A controls the brake valve 31 and supplies air to the axle modulator 40. Alternatively, the axle modulator 40 may be controlled by a position detection signal outputted from a sensor that detects a position of a brake pedal.

Since the safety module 142L of the left-side rear wheel and the safety module 142R of the right-side rear wheel 52 share a same configuration, only the left-side safety module 142L will be described. It should be noted that the safety modules 142L and 142R of the rear wheels 52 only differ from the safety modules 132L and 132R of the front wheels 51 in states of connection to tanks and the like, and share a similar configuration to the safety modules 132L and 132R of the front wheels 51. The safety module 142L is connected to the brake chamber 150 of the rear wheels 52 via the shuttle valve 34. The safety module 142L has a similar configuration to the safety modules 132L and 132R provided with respect to the front wheels 51. The safety modules 142L and 142R of the rear wheels 52 are also connected to the suspension tank 28.

Each brake chamber 150 of the rear wheels 52 includes a service brake air storage chamber and a parking brake air storage chamber. The brake chamber 150 is provided with a spring which stops the rotation of the wheel by applying a biasing force thereto. When air is supplied in a prescribed amount or more to the parking brake air storage chamber, the spring is compressed due to pneumatic pressure and the biasing force with respect to the wheel is released, and when air is discharged from the parking brake air storage chamber, the biasing force of the spring is applied to the wheel.

The safety modules 132L, 132R, 142L, and 142R are controlled by a second brake ECU 15B. The second brake ECU 15B acquires a pressure detection signal of the pressure sensor 54. Based on the pressure detection signal, the second brake ECU 15B learns a relationship between pressure and deceleration. Deceleration is calculated by the second brake ECU 15B based on speed acquired from the vehicle speed sensor 53 via an on-board network 19. Alternatively, the second brake ECU 15B acquires deceleration calculated by a vehicle platooning ECU 11 or the like from the on-board network 19. The second brake ECU 15B controls the safety modules 132L, 132R, 142L, and 142R based on a deceleration request of the vehicle platooning ECU 11 and a learned result so that the vehicle 100 decelerates to a prescribed speed. In addition to the relationship between deceleration and pressure, the second brake ECU 15B may learn a relationship between speed and pressure.

When a pneumatic signal is inputted from a parking brake control valve 55, a parking brake relay valve 56 supplies the air inside the parking brake tank 25 to the parking brake air storage chambers of the brake chambers 150 of the rear wheels 52. As a result, each spring is compressed by pressure of air that fills the air storage chamber and the parking brake is released. On the other hand, when a pneumatic signal is not inputted to the parking brake relay valve 56 from the parking brake control valve 55, air is discharged from the parking brake air storage chamber and the parking brake is actuated by the biasing force of each spring. Alternatively, the parking brake relay valve 56 may be configured as a solenoid valve to be controlled by the first brake ECU 15A or the like.

A signal supply path 65 of a forced brake module 170 as an air supplier is connected between the parking brake control valve 55 and the parking brake relay valve 56. One forced brake module 170 is provided with respect to one vehicle 100. In addition, the forced brake module 170 is controlled by the vehicle platooning ECU 11.

The forced brake module 170 includes a signal input port to be connected to the signal supply path 65, two connection ports to be connected to the pneumatic lines of the safety modules 132L and 132R of the front wheels 51 and the pneumatic lines of the safety modules 142L and 142R of the rear wheels 52, and an input port to be connected to a tank-side supply path 66 to which air is supplied from the suspension tank 28. The forced brake module 170 is capable of supplying air inside the suspension tank 28 to the brake chambers 150 via the safety modules 132L, 132R, 142L, and 142R. In a state where no abnormality has occurred, in other words, during normal time, the forced brake module 170 cuts off supply of air to the safety modules 132L, 132R, 142L, and 142R. In addition, in a prescribed state where an abnormality has occurred, the forced brake module 170 supplies air to the brake chambers 150 via the safety modules 132L, 132R, 142L, and 142R, and actuates the forced brake. When air is supplied from the forced brake module 170, since pressure of the forced brake module 170 becomes higher than pressure of the axle modulator 30 or 40, each shuttle valve 34 allows a flow of air from the forced brake module 170 to the brake chambers 150.

Next, configurations of the forced brake module 170 and the safety modules 132L, 132R, 142L, and 142R will be described in detail with reference to Fig. 8. Since the safety modules 132L, 132R, 142L, and 142R share a same configuration, Fig. 8 only shows the configuration of the safety module 142L of the rear wheels 52 in detail. In Fig. 8, solid lines connecting tanks and actuators represent air passages, and dashed lines connected to the vehicle platooning ECU 11 and the second brake ECU 15B represent a state where the ECUs are electrically connected with actuators.

A state is shown where the ignition switch of the vehicle 100 is turned off and the parking brake is actuated. The vehicle platooning ECU 11, the first brake ECU 15A, and the second brake ECU 15B are all normal. The forced brake module 170 includes a first solenoid control valve 171, a forced brake release valve 172, a pneumatic control valve 73, and a relay valve 74 as a first relay valve. The first solenoid control valve 171, the forced brake release valve 172, and the pneumatic control valve 73 are provided in a first passage 81 which branches from the tank-side supply path 66. The relay valve 74 includes a signal input port 74P and the signal input port 74P is connected to the first passage 81.

The first solenoid control valve 171 is a three-port, two-position valve connected to the suspension tank 28, a discharge path 85 that connects to a discharge port 80 for discharging air inside the circuit, and the relay valve 74. The first solenoid control valve 171 is controlled by the vehicle platooning ECU 11 and is configured to be capable of changing its position between: a connection position where the tank-side supply path 66 and the forced brake release valve 172 communicate with each other; and a discharge position where the forced brake release valve 172 in the first passage 81 and the discharge path 85 are connected to each other. The first solenoid control valve 171 includes a valve spring 171S which applies a biasing force so as to place the first solenoid control valve 171 at the connection position. The first solenoid control valve 171 takes the connection position in a non-energized state and the discharge position in an energized state.

The forced brake release valve 172 is provided between the first solenoid control valve 171 and the pneumatic control valve 73 in the first passage 81. The forced brake release valve 172 is a three-port, two-position valve connected to the first solenoid control valve 171 in the first passage 81, the discharge path 85, and the pneumatic control valve 73 in the first passage 81. The forced brake release valve 172 is configured to be capable of changing its position between: a connection position where the tank-side supply path 66 and the pneumatic control valve 73 communicate with each other; and a discharge position where the pneumatic control valve 73 in the first passage 81 and the discharge path 85 are connected to each other. The forced brake release valve 172 is provided with a valve spring 172S which applies a biasing force so as to place the forced brake release valve 172 in the connection position. In addition, the forced brake release valve 172 has an operating part 172A which is manually operated. The forced brake release valve 172 takes the connection position in a state where the operating part 172A is not manually operated, and takes the discharge position when the operating part 172A is manually operated.

The pneumatic control valve 73 is a three-port, two-position valve which is connected to the forced brake release valve 172 in the first passage 81, the discharge path 85, and the relay valve 74, and is controlled by a pneumatic signal. A signal input port 73P of the pneumatic control valve 73 is connected to the signal supply path 65 which extends from a position between the between the parking brake control valve 55 and the parking brake relay valve 56.

The parking brake relay valve 56 is connected to a parking brake air storage chamber 50B of the brake chamber 150. When air is discharged from the air storage chamber 50B of the brake chamber 150, a push rod 50E having a wedge 50D on a tip thereof is extended by a biasing force of a spring 50C of the brake chamber 150 and the wedge 50D is inserted into a brake lining (not illustrated) of the rear wheel 52 to actuate the parking brake. When air is supplied to the air storage chamber 50B from the parking brake relay valve 56, the spring 50C is compressed and moves the push rod 50E in a direction in which the wedge 50D is pulled back from the wheel to release the parking brake.

The pneumatic control valve 73 is configured to be capable of changing its position between: a discharge position where the relay valve 74 and the discharge path 85 are connected to each other; and a connection position where the tank-side supply path 66 and the relay valve 74 communicate with each other. When the parking brake is actuated, a pneumatic signal is not inputted to the signal input port 73P of the pneumatic control valve 73, and when a pneumatic signal is sent from the parking brake control valve 55 to the relay valve 74 and the parking brake is released, the pneumatic signal is inputted to the signal input port 73P. The pneumatic control valve 73 is provided with a valve spring 73S which applies a biasing force so as to place the pneumatic control valve 73 in the discharge position. The pneumatic control valve 73 takes the discharge position when a pneumatic signal is not inputted to the signal input port 73P and takes the connection position when a pneumatic signal is inputted to the signal input port 73P.

The relay valve 74 is a three-port, two-position valve that is connected to a second passage 82 which branches from the tank-side supply path 66, the discharge path 85, and a forced brake module connection path 86 which communicates with the safety modules 132L, 132R, 142L, and 142R of each wheel, respectively. The relay valve 74 inputs air sent through the first passage 81 to the signal input port 74P as a pneumatic signal. In addition, the second passage 82 is, for example, a pneumatic line with a larger inner diameter than that of the first passage 81 and is capable of supplying the safety modules 132L, 132R, 142L, and 142R with a larger amount of air per unit time than the first passage 81. The relay valve 74 is configured to be capable of changing its position between: a discharge position where the forced brake module connection path 86 and the discharge path 85 are connected to each other; and a connection position where the second passage 82 and the forced brake module connection path 86 are connected to each other. At the discharge position, filled air up to a shuttle valve 93 in the forced brake module connection path 86 is discharged to the discharge path 85. The relay valve 74 is provided with a valve spring 74S which applies a biasing force so as to place the relay valve 74 in the discharge position. The relay valve 74 takes the discharge position when a pneumatic signal is not inputted to the signal input port 74P and takes the connection position when a pneumatic signal is inputted to the signal input port 74P. At the discharge position, the relay valve 74 discharges air from the safety modules 132L, 132R, 142L, and 142R and, at the connection position, the relay valve 74 supplies the safety modules 132L, 132R, 142L, and 142R with the large amount of air stored in the suspension tank 28.

Next, a configuration of the safety modules 132L, 132R, 142L, and 142R will be described in detail. Since the safety modules 132L, 132R, 142L, and 142R share a same configuration as described earlier, only the configuration of the safety module 142L will now be described. The safety module 142L includes a second solenoid control valve 90 and a third solenoid control valve 91 as safety solenoid control valves, a relay valve 92 as a second relay valve, and the shuttle valve 93.

The second solenoid control valve 90 and the third solenoid control valve 91 are provided in a third passage 83. One end of the third passage 83 is connected to the tank-side supply path 66 and the other end of the third passage 83 is connected to the discharge path 85. The second solenoid control valve 90 is configured to be capable of changing its position between a cutoff position where the third passage 83 is cut off and a connection position where the third passage 83 is caused to communicate. The second solenoid control valve 90 is controlled by the second brake ECU 15B and takes the cutoff position in a non-energized state due to a biasing force of a valve spring 90S and takes the connection position in an energized state. It should be noted that the safety modules 132L, 132R, and 142R other than the safety module 142L are also provided with the third passage 83.

The third solenoid control valve 91 is configured to be capable of changing its position between a connection position where the third passage 83 is caused to communicate and a cutoff position where the third passage 83 is cut off. The third solenoid control valve 91 is controlled by the second brake ECU 15B, and the third solenoid control valve takes the connection position in a non-energized state due to a biasing force of a valve spring 91S and takes the cutoff position in an energized state.

The shuttle valve 93 is connected to the forced brake module connection path 86, a safety module connection path 87 which connects to a position between the second solenoid control valve 90 and the third solenoid control valve 91, and a signal supply path 88 which connects to the relay valve 92. The shuttle valve 93 allows a flow of air to the signal supply path 88 from one of the forced brake module connection path 86 and the safety module connection path 87 that has higher pressure. The signal supply path 88 is connected to a signal input port 92P of the relay valve 92. It should be noted that the forced brake module connection path 86 is also connected to the safety modules 132L, 132R, and 142R other than the safety module 142L.

The relay valve 92 is a three-port, two-position valve that is connected to a fourth passage 84 which branches from the tank-side supply path 66, the discharge path 85, and a chamber connection path 89 which connects to the brake chamber 150. An inner diameter of the fourth passage 84 is larger than, for example, that of the signal supply path 88, and the fourth passage 84 is capable of supplying a larger amount of air per unit time compared with the signal supply path 88. A large amount of air from the tank-side supply path 66 is supplied from the fourth passage 84. It should be noted that the safety modules 132L, 132R, and 142R other than the safety module 142L are also provided with the fourth passage 84.

The relay valve 92 is configured to be capable of changing its position between: a discharge position where the chamber connection path 89 and the discharge path 85 are connected to each other; and a connection position where the fourth passage 84 and the chamber connection path 89 are connected to each other. In addition, the relay valve 92 is provided with a valve spring 92S which applies a biasing force so as to place the relay valve 92 in the discharge position. The relay valve 92 takes the discharge position when a pneumatic signal is not inputted to the signal input port 92P and discharges the air in the chamber connection path 89 to the discharge path 85. In addition, the relay valve 92 takes the connection position when a pneumatic signal is inputted and supplies the chamber connection path 89 with the large amount of air in the fourth passage 84.

The shuttle valve 34 is connected to the chamber connection path 89. The shuttle valve 34 is connected to the safety module 142L, the axle modulator 40 controlled by the first brake ECU 15A, and a service brake air storage chamber 50A of the brake chamber 150. The other safety modules 132L, 132R, and 142R are also connected to the brake chamber 150 provided in each wheel via the shuttle valve 34 (refer to Fig. 7) via the shuttle valve 34.

A connection path which connects the shuttle valve 34 and the brake chamber 150 to each other is provided with the pressure sensor 54. The pressure sensor 54 outputs signals in accordance with pressure in the connection path to the first brake ECU 15A, the second brake ECU 15B, and the like. When the axle modulators 30 and 40 supply air to the brake chamber 150, the second brake ECU 15B learns a relationship between pressure and deceleration based on the pressure detection signal outputted from the pressure sensor 54. Deceleration is calculated by the second brake ECU 15B, or the second brake ECU 15B acquires deceleration calculated by the first brake ECU 15A or the vehicle platooning ECU 11 via the on-board network 19. In addition to the relationship between deceleration and pressure, the second brake ECU 15B may learn a relationship between speed and pressure.

When a transition is made from a state where the parking brake is actuated to a state where the vehicles 100 are travelable, the vehicle platooning ECU 11 energizes the first solenoid control valve 171 to place the first solenoid control valve 171 in the discharge position. In addition, the vehicle platooning ECU 11 controls the parking brake control valve 55 to supply air from the parking brake relay valve 56 to the brake chamber 150. The pneumatic control valve 73 takes the connection position in response to an input of a pneumatic signal to the signal input port 73P. Accordingly, a state is created where the forced brake can be actuated.

Next, each mode of the pneumatic brake system 20 will be described together with operations of the forced brake module 170 and the safety modules 132L, 132R, 142L, and 142R with reference to Figs. 9 to 13. The pneumatic brake system 20 has a normal travel mode, a deceleration travel mode, a forced brake mode, and a restart mode. It should be noted that the description of operations of the safety modules 132L, 132R, 142L, and 142R will focus on operations of the safety module 142L which corresponds to the left-side rear wheel 52. In addition, in Figs. 9 to 13, each bold solid line represents a state where air is being supplied in an air passage, and each bold dashed line represents a state where air is being discharged in an air passage. Furthermore, dashed lines connected to the vehicle platooning ECUs 11 and the second brake ECU 15B each represent a state where the ECUs are electrically connected with actuators.

The deceleration travel mode by the second brake ECU 15B will be described with reference to Figs. 9 and 6. In the deceleration travel mode, the ignition switch is turned on, and the parking brake is released. The deceleration travel mode is executed in cases where an abnormality occurs in the first brake ECU 15A and normal brake control cannot be executed. Specifically, the deceleration brake mode is executed in the following cases.

Cases where an abnormality only occurs in the first brake ECU 15A and the vehicle platooning ECUs 11 and the second brake ECU 15B are normal.

Cases where an abnormality occurs in the first brake ECU 15A and one of the vehicle platooning ECUs 11 and the second brake ECU 15B and the other vehicle platooning ECU 11 are normal.

As shown in Fig. 9, when the normal vehicle platooning ECU 11 detects an occurrence of an abnormality of the first brake ECU 15A, the vehicle platooning ECU 11 maintains the first solenoid control valve 171 in an energized state. In addition, the vehicle platooning ECU 11 determines a necessity of deceleration based on a speed or deceleration of the preceding vehicle 100, a speed inputted from the vehicle speed sensor 53, or the like. When the vehicle platooning ECU 11 determines that deceleration is necessary, the vehicle platooning ECU 11 outputs a deceleration instruction to the second brake ECU 15B.

When a deceleration instruction is inputted to the second brake ECU 15B, the second brake ECU 15B places the second solenoid control valve 90 and the third solenoid control valve 91 in an energized state. The second solenoid control valve 90 takes the connection position, while the third solenoid control valve 91 takes the cutoff position. Air sent from the tank-side supply path 66 is supplied to the safety module connection path 87 via the second solenoid control valve 90. Accordingly, since the safety module connection path 87 has higher pressure of the safety module connection path 87 and the forced brake module connection path 86, the shuttle valve 93 supplies air from the safety module connection path 87 to the signal supply path 88.

As a result, a pneumatic signal is inputted to the signal input port 92P of the relay valve 92 from the safety module connection path 87 and the relay valve 92 takes the connection position. In addition, air is supplied from the tank-side supply path 66 to the chamber connection path 89 via the relay valve 92 placed in the connection position. Since the deceleration travel mode is premised on an occurrence of an abnormality in the first brake ECU 15A, the supply of air from the axle modulators 30 and 40 is stopped. Therefore, since the chamber connection path 89 has higher pressure of the chamber connection path 89 and the axle modulators 30 and 40, the shuttle valve 34 supplies air to the service brake air storage chamber 50A of the brake chamber 150 through the chamber connection path 89.

Fig. 10 shows a state where the vehicles 100 are not decelerated in the deceleration travel mode. When the vehicle platooning ECU determines that the vehicles 100 should not decelerate, the vehicle platooning ECU stops the output of the deceleration instruction to the second brake ECU 15B while maintaining the first solenoid control valve 171 in the energized state. When the output of the deceleration instruction from the vehicle platooning ECU 11 is stopped, the second brake ECU 15B places the second solenoid control valve 90 and the third solenoid control valve 91 in a non-energized state.

Due to the second solenoid control valve 90 taking the cutoff position and the third solenoid control valve 91 taking the connection position, the air in the signal supply path 88 is discharged from the discharge port 80 via the shuttle valve 93, a part of the third passage 83, and the discharge path 85. Accordingly, the relay valve 92 takes the discharge position and the air inside the service brake air storage chamber 50A of the brake chamber 150 is discharged from the discharge port 80 via the shuttle valve 34, the relay valve 92, and the discharge path 85. As a result, the service brake is released.

In the deceleration travel mode, the second brake ECU 15B repetitively performs energization and non-energization of the second solenoid control valve 90 and the third solenoid control valve 91 in response to an input of a pressure detection signal from the pressure sensor 54 so that pressure in front of the brake chamber 150 equals pressure in accordance with target deceleration.

Next, the forced brake mode will be described with reference to Fig. 11. In this mode, the ignition switch is turned on and the parking brake is released. The forced brake mode is executed in the following cases.

Cases including a state where abnormalities have occurred in both vehicle platooning ECUs 11.

Cases including a state where abnormalities have occurred in the first brake ECU 15A and the second brake ECU 15B.

In the forced brake mode, the first solenoid control valve 171 is in a non-energized state. When abnormalities occur in both vehicle platooning ECUs 11, the first solenoid control valve 171 is inevitably placed in a non-energized state. The pneumatic control valve 73 takes the connection position in response to a pneumatic signal being supplied to the signal input port 73P. The relay valve 74 takes the connection position in response to an input of a pneumatic signal to the signal input port 74P. At this point, if air sent to the relay valve 74 as a pneumatic signal is of a small amount, the time from the first solenoid control valve 171 being placed in a non-energized state to the relay valve 74 taking the connection position can be reduced. When the relay valve 74 takes the connection position, the large amount of air stored in the suspension tank 28 is sent to the forced brake module connection path 86.

Due to air sent to the forced brake module connection path 86 via the relay valve 74, pressure in the forced brake module connection path 86 becomes higher than pressure in the safety module connection path 87. Therefore, the shuttle valve 93 distributes air from the forced brake module connection path 86 to the signal supply path 88 which connects to the safety modules 132L, 132R, 142L, and 142R, respectively.

The relay valve 92 of the safety module 142L takes the connection position in response to an input of a pneumatic signal to the signal input port 92P. Accordingly, the large amount of air stored in the suspension tank 28 is sent to the service brake air storage chamber 50A of the brake chamber 150 via the tank-side supply path 66, the fourth passage 84, the relay valve 92, and the shuttle valve 34. As a result, the forced brake is actuated.

Next, the restart mode will be described with reference to Figs. 12 and 13. The restart mode is a mode for restarting the vehicles 100 by driving performed by a driver after the forced brake is actuated. By restarting the vehicle 100 at a prescribed speed after the actuation of the forced brake, the driver can move the vehicles 100 to a nearby maintenance shop or the like.

As shown in Fig. 12, immediately after the forced brake is actuated, the first solenoid control valve 171, the second solenoid control valve 90, and the third solenoid control valve 91 are in a non-energized state. In addition, after the forced brake is actuated, the pneumatic control valve 73 is at the discharge position due to the parking brake being actuated by another control system.

The restart mode is started by an operation of the operating part 172A of the forced brake release valve 172 by the driver. In addition, the pneumatic control valve 73 is at the discharge position, and air inside the first passage 81 is discharged from the discharge port 80, whereby the relay valve 74 takes the discharge position. Accordingly, air inside the forced brake module connection path 86 is supplied to the discharge path 85 and discharged from the discharge port 80.

In addition, the second solenoid control valve 90 takes the cutoff position, and the third solenoid control valve 91 takes the connection position, whereby air is not supplied to the third passage 83, and the air between the second solenoid control valve 90 and the second solenoid control valve 90 is supplied to the discharge path 85 and then discharged from the discharge port 80. As a result, since the forced brake module connection path 86 and the safety module connection path 87 do not supply air to the shuttle valve 93, a pneumatic signal is not inputted to the signal input port 92P of the relay valve 92. Accordingly, the relay valve 92 takes the discharge position. In addition, while the parking brake is kept actuated by the biasing force of the spring 50C, the air inside the service brake air storage chamber 50A of the brake chamber 150 is discharged from the discharge port 80 via the discharge path 85.

As shown in Fig. 13, when the parking brake is released by a normal ECU or another brake control system, a pneumatic signal is input to the signal input port 73P of the pneumatic control valve 73, and the pneumatic control valve 73 is placed in the connection position. At this point, even when the pneumatic control valve 73 takes the connection position, since the forced brake release valve 172 is kept at the discharge position, air is not supplied from the forced brake module 170. When decelerating the vehicles 100, the driver actuates a brake pedal provided in the brake valve 31 (refer to Fig. 7). When the brake pedal is actuated, a pneumatic signal is inputted to the axle modulators 30 and 40 from the brake valve 31. When a pneumatic signal is input to the axle modulator 30, the axle modulator 30 distributes air directly supplied from the front wheel brake tank 27 via the supply path 61 to the safety modules 132L and 132R, respectively. The air supplied to the safety modules 132L and 132R is supplied to the service brake air storage chamber of the brake chambers 150 to actuate the service brake of the front wheels 51. In addition, the axle modulator 40 supplies air to the service brake air storage chamber 50A of the brake chambers 150 via the shuttle valve 34 and actuates the service brake of the rear wheels 52.

As described above, according to the above embodiment, the advantages listed below are gained.

(6) The pneumatic brake system includes four safety modules 132L, 132R, 142L, and 142R. Therefore, compared to a case where only a single safety module is provided, even when an abnormality occurs in at least any of the safety modules, since brakes are applied by other safety modules, safety of the pneumatic brake system can be further enhanced.

(7) Due to the forced brake module 170, air can be distributed to the plurality of safety modules 132L, 132R, 142L, and 142R through a supply system that differs from that of the axle modulators 30 and 40 which are controlled by the first brake ECU 15A. Therefore, even when an abnormality occurs in the supply system that includes the axle modulators 30 and 40, brakes can be forcibly actuated.

(8) The forced brake module 170 is capable of forcibly actuating brakes. Accordingly, safety can be enhanced.

(9) One forced brake module 170 is provided with respect to the plurality of safety modules 132L, 132R, 142L, and 142R. Therefore, the number of parts can be reduced compared to a case where an air supplier that supplies a pneumatic signal is provided for each of the safety modules 132L, 132R, 142L, and 142R.

(10) Since the forced brake module 170 distributes air to the plurality of safety modules 132L, 132R, 142L, and 142R as pneumatic signals, a large amount of air must be supplied. The forced brake module 170 is controlled by a small amount of air that is a pneumatic signal and is provided with the relay valve 74 which supplies a larger amount of air than that of a pneumatic signal. Therefore, when the first solenoid control valve 171 is placed in a non-energized state, the large amount of air stored in the suspension tank 28, which is an air supply source, can be distributed to the plurality of safety modules 132L, 132R, 142L, and 142R within a short period of time.

(11) Since the first solenoid control valve 171 of the forced brake module 170 outputs a pneumatic signal to the relay valve 74 during its non-energization state, when an abnormality occurs in the vehicle platooning ECU 11 which controls the first solenoid control valve 171, a pneumatic signal can be outputted to the relay valve 74 in order to actuate the service brake. Therefore, the safety of the pneumatic brake system 20 can be enhanced.

(12) Since the pneumatic control valve 73 supplies air to the relay valve 74 when the parking brake is released, air can be supplied to the brake chamber 150 via the pneumatic control valve 73 and the relay valve 74 to actuate the safety service brake only when the parking brake is released.

(13) Each relay valve 92 of the safety modules 132L, 132R, 142L, and 142R is capable of supplying the large amount of air stored in the suspension tank 28 that is an air supply source to the brake chamber 150 when a small amount of air that is a pneumatic signal is supplied to the relay valve 92. Therefore, an actuation time from the start of output of a pneumatic signal to the relay valve 92 to the actuation of the service brake can be shortened. In addition, the pneumatic signal can be supplied to the relay valve 92 via the shuttle valve 93 from one of the forced brake module connection path 86 and the safety module connection path 87 that has higher pressure. In other words, since the relay valve 92 for supplying air to the brake chamber 150 can be shared by a system which supplies air to the brake chamber 150 from the forced brake module 170 and a system which supplies air to the brake chamber 150 from the second solenoid control valve 90 and the third solenoid control valve 91, the number of parts can be reduced.

The embodiments described above can also be appropriately modified and implemented as follows.

While the safety air supplier 33 and the safety brake valve 71 use the suspension tank 28 as an air supply source in the first embodiment, the air storage tank 21 or another tank may be used instead.

While the load sensing valve 72 which communicates with a suspension system is provided in the first embodiment, the load sensing valve 72 may be omitted if feedback control of a braking force can be executed based on a vehicle speed acquired from the vehicle speed sensor 53. Alternatively, the vehicle platooning ECU 11 may acquire a payload value from a load sensor which detects a payload and outputs a deceleration request to the second brake ECU 15B based on the payload value. Alternatively, the second brake ECU 15B may directly acquire the payload value from the load sensor.

The first embodiment adopts a configuration in which when an abnormality occurs in the first brake ECU 15A and one of the vehicle platooning ECUs 11, the forced brake is actuated by the normally operating vehicle platooning ECU 11. Alternatively, the second brake control ECU 15B may be configured to perform brake control based on a deceleration request by the normally operating vehicle platooning ECU 11. Alternatively, the second brake ECU 15B may actuate the brakes so that the vehicles 100 travel at a prescribed speed (for example, 20 km per hour).

While the second brake ECU 15B is configured to decelerate the vehicles 100 to, for example, 20 km per hour when an abnormality occurs in the first brake ECU 15A in the first embodiment, the second brake ECU 15B may be configured to actuate the brakes so as to stop the vehicles 100. In addition, the second brake ECU 15B may be configured to control the brakes in a similar manner to the first brake ECU 15A or, in other words, control the brakes in accordance with a deceleration request by the vehicle platooning ECU 11 and enable the vehicles 100 to travel when an abnormality occurs in the first brake ECU 15A.

In the first embodiment, normal brake control is performed even when an abnormality occurs in the second brake ECU 15B (state 210). Alternatively, the first brake ECU 15A may be configured to perform deceleration travel when an abnormality occurs in the second brake ECU 15B. In that case, when an abnormality further occurs in the first brake ECU 15A or the like, the vehicle can be gradually stopped.

While the vehicle platooning control system 10 includes the safety brake valve 71 for actuating the forced brake in the first embodiment, the safety brake valve 71 may be omitted if, for example, a mechanism for actuating brakes in a case where abnormalities occur in all of the ECUs or the like is provided instead.

The vehicle platooning control system 10 need only include at least the second brake ECU 15B and the safety modules 32L, 32R, 42L, and 42R and other components can be modified as appropriate.

In the first embodiment, the safety modules 32L, 32R, 42L, and 42R are provided so as to correspond to each wheel. Alternatively, a safety module may be provided so as to correspond to at least one wheel. Alternatively, a safety module may be provided so as to correspond to both wheels of one axle. Alternatively, a safety module may be provided so as to correspond to at least one drive wheel.

In the first embodiment, the safety modules 32L, 32R, 42L, and 42R share the same configuration. Alternatively, a configuration of the safety modules 32L and 32R of the front wheels may differ from a configuration of the safety modules 42L and 42R of the rear wheels. Alternatively, configurations of the safety modules may differ between left-side wheels and right-side wheels.

While the vehicle platooning control system 10 is described as a brake system of the vehicle 100 which performs vehicle platooning in the first embodiment, the vehicle platooning control system 10 may be mounted to a brake system of a vehicle which travels independently without participating in vehicle platooning.

While the vehicle 100 uses the rear wheels 52 as drive wheels in the first embodiment, the vehicle 100 may use the front wheels 51 as drive wheels. In addition, the vehicle platooning control system 10 is described in the above embodiment as a system to be mounted to a cargo vehicle equipped with a flatbed. As other modes, the air supply system may be mounted to other vehicles such as an automobile, an articulated vehicle in which a trailer is coupled to a tractor, and a railroad vehicle.

The second embodiment assumes that the lead vehicle 100a and the following vehicles 100b are mounted with the same vehicle platooning control system 10. Alternatively, the lead vehicle 100a may not be mounted with the vehicle platooning control system 10 or may be mounted with a vehicle platooning control system which differs from that of the following vehicles 100b.

In the second embodiment, the safety modules 132L, 132R, 142L, and 142R share the same configuration. Alternatively, the configurations of the safety modules 132L, 132R, 142L, and 142R may differ from one another. Alternatively, a plurality of modules of four or less among the safety modules 132L, 132R, 142L, and 142R may be the same.

In the second embodiment, the deceleration travel mode is executed in "cases where an abnormality only occurs in the first brake ECU 15A and the vehicle platooning ECUs 11 and the second brake ECU 15B are normal" and in "cases where an abnormality occurs in the first brake ECU 15A and one of the vehicle platooning ECUs 11, and the second brake ECU 15B and the other vehicle platooning ECU 11 are normal". However, even in cases other than the above, the deceleration travel mode may be performed when a brake under the control of the first brake ECU 15A is not normally actuated or when there is a possibility that a brake under the control of the first brake ECU 15A will not be normally actuated. If the above is done, the safety of the pneumatic brake system can be further enhanced.

In the second embodiment, the forced brake mode is executed in "cases including a state where abnormalities have occurred in both vehicle platooning ECUs 11" and in "cases including a state where abnormalities have occurred in the first brake ECU 15A and the second brake ECU 15B". However, even in cases other than the above, the forced brake mode may be performed when a brake under the control of the first brake ECU 15A is not normally actuated or when there is a possibility that a brake under the control of the first brake ECU 15A will not be normally actuated, when an abnormality occurs in one of the vehicle platooning ECUs 11, when a state of communication with another vehicle 100 is not preferable, and the like. If the above is done, the safety of the pneumatic brake system can be further enhanced.

In the second embodiment, the deceleration travel mode is performed in "cases where an abnormality only occurs in the first brake ECU 15A, and the vehicle platooning ECUs 11 and the second brake ECU 15B are normal" and in "cases where an abnormality occurs in the first brake ECU 15A, and one of the vehicle platooning ECUs 11 and the second brake ECU 15B and the other vehicle platooning ECU 11 are normal". Safety can be further enhanced by performing the deceleration travel mode even when an abnormality occurs in the second brake ECU 15B in addition to in the cases described above.

In the second embodiment, the pneumatic brake system has the normal travel mode, the deceleration travel mode, the forced brake mode, and the restart mode. However, the pneumatic brake system need only have the normal travel mode and at least the deceleration travel mode and the forced brake mode, and the pneumatic brake system need not have the restart mode described earlier as long as the pneumatic brake system is provided with means for restarting the vehicle 100 after actuation of the forced brake.

In the second embodiment, the forced brake module 170 and the safety modules 142L and 142R of the rear wheels 52 are connected to each other. In addition thereto, a load sensing valve (a pressure regulating valve) may be provided in a pneumatic line connecting the forced brake module 170 and the safety modules 142L and 142R to each other. The load sensing valve is capable of regulating an amount of air to be supplied to the service brake air storage chamber of the brake chamber 150. The load sensing valve has a port to be connected to the air suspension system. Pressure at the port is the same as pressure in the air suspension system. When a payload of the vehicle 100 is large, the pressure at the port increases. When the pressure at the port of the load sensing valve exceeds a prescribed value, the load sensing valve increases an amount of air supplied to the safety modules 142L and 142R of the rear wheels 52 which are drive wheels. Alternatively, the load sensing valve may be provided in a pneumatic line connecting the forced brake module 170 and the safety modules 132L and 132R of the front wheels 51 to each other.

In the second embodiment, the safety modules 132L, 132R, 142L, and 142R include the shuttle valve 93 which allows a flow of air to the signal supply path 88 from one of the forced brake module connection path 86 and the safety module connection path 87 that has higher pressure. Alternatively, an actuator may be provided which switches between, by pneumatic control or electric control, a flow from the forced brake module connection path 86 to the signal supply path 88 and a flow from the safety module connection path 87 to the signal supply path 88.

In the second embodiment, the forced brake module 170 includes the pneumatic control valve 73 which inputs air from the brake chamber 150 as a pneumatic signal when the parking brake is released. Alternatively, the forced brake module 170 may include a solenoid control valve which is electrically controlled according to the actuation and release of the parking brake. For example, a solenoid control valve can be preferably used when a parking brake system is electrically controlled. In this case, the use of the solenoid control valve in place of a pneumatic control valve enables responsiveness to be further improved.

In the second embodiment, the forced brake module 170 includes the first solenoid control valve 171 which supplies, during non-energization, the relay valve 74 with air supplied from the suspension tank 28. Alternatively, the first solenoid control valve 171 may supply, during energization, the relay valve 74 with air supplied from the suspension tank 28.

In the second embodiment, the forced brake module 170 includes the relay valve 74 as a first relay valve. Alternatively, the relay valve 74 may be omitted by connecting the pneumatic control valve 73 to the shuttle valve 93.

In the second embodiment, the forced brake module 170 which distributes air to the plurality of safety modules 132L, 132R, 142L, and 142R is provided. Alternatively, one forced brake module 170 may be provided with respect to the safety modules 132L and 132R of the front wheels and one forced brake module 170 may be provided with respect to the safety modules 142L and 142R of the rear wheels. Alternatively, one forced brake module 170 may be provided with respect to each of the safety modules 132L, 132R, 142L, and 142R.

## Claims

1. A pneumatic brake system (20) configured to actuate a brake by supplying air to a brake mechanism (50) provided on each wheel (51, 52) of a vehicle (100) and to release the brake by discharging air from the brake mechanism (50), the pneumatic brake system comprising, for each brake mechanism (50):
a safety air supplier (33) which is actuated by a safety brake control device (15B) in an emergency to supply air to the brake mechanism (50); and
a shuttle valve (34),
**characterized in that**
said shuttle valve (34) is connected to the safety air supplier (33) and to a brake air supply circuit for supplying air to the brake mechanism (50) during normal time by way of a route that is different from the safety air supplier (33), wherein the shuttle valve (34) allows a flow of air only in a direction toward the brake mechanism (50) from one of the safety air supplier (33) and the brake air supply circuit that has higher pressure.

2. The pneumatic brake system according to claim 1, further comprising a forced brake solenoid valve (71) which is controlled by a main control device (11B) configured to output a braking request to the safety brake control device (15B) which controls the safety air supplier (33), wherein
the forced brake solenoid valve (71) cuts off supply of air from an air supply source (21) which stores compressed air to the brake mechanism (50) in an energized state where the forced brake solenoid valve (71) is energized by the main control device (11B), and supplies air from the air supply source (21) to the brake mechanism (50) in a non-energized state, and
the shuttle valve (34) allows supply of air from the forced brake solenoid valve (71) to the brake mechanism (50) when air is supplied from the forced brake solenoid valve (71).

3. The pneumatic brake system according to claim 2, wherein
a valve device (72) communicating with an air-driven suspension system is provided between the forced brake solenoid valve (71) and the safety air supplier (33), and the valve device (72) increases an amount of air supplied to the brake mechanism (50) in accordance with an increase in a payload of the vehicle (100).

4. The pneumatic brake system according to claim 2 or 3, wherein
the safety brake control device (15B) is configured to detect an abnormality in a main brake control device (15A) which controls an air supply circuit that differs from the safety air supplier (33), and cause the vehicle (100) to travel at a prescribed speed or to stop by supplying air to the brake mechanism (50) based on the braking request from the main control device (11B).

5. The pneumatic brake system according to claim 2 or 3, wherein
when abnormalities in both a main brake control device (15A) which controls an air supply circuit that differs from the safety air supplier (33) and the main control device (11B) occur, the forced brake solenoid valve (71) is placed in a non-energized state and the brake is forcibly actuated.

6. A pneumatic brake system configured to supply and discharge air from an air supply source (21) to and from a brake mechanism (150) which actuates and releases a service brake of a vehicle (100), the pneumatic brake system comprising a plurality of safety modules (132L, 132R, 142L, 142R),
**characterized in that,**
when a modulator controlled by a first brake control device during normal time does not actuate, each safety module (132L, 132R, 142L, 142R) is controlled by a second brake control device and performs supply and discharge of air to and from the brake mechanism (150), wherein said second brake control device only controls braking in a prescribed state where an abnormality has occurred in said first brake control device.

7. The pneumatic brake system according to claim 6, wherein
the air supply source (21) and the modulator are included in a first supply system, and the pneumatic brake system further comprises an air supplier which, in a second supply system that differs from the first supply system, distributes air supplied from the air supply source (21) to the plurality of safety modules (132L, 132R, 142L, 142R) as pneumatic signals.

8. The pneumatic brake system according to claim 7, wherein
the air supplier is one of a plurality of air suppliers, and each safety module (132L, 132R, 142L,142R) is provided in one of a plurality of wheels (51, 52) of the vehicle (100) and connected to one of the plurality of air suppliers.

9. The pneumatic brake system according to claim 7 or 8, wherein the air supplier includes:
a solenoid control valve (171) which supplies air supplied from the air supply source (21) as a pneumatic signal; and
a first relay valve (74) which distributes air stored in the air supply source (21) to the plurality of safety modules (132L, 132R, 142L, 142R) in accordance with a presence or absence of the pneumatic signal.

10. The pneumatic brake system according to claim 9, wherein
during non-energization, the solenoid control valve (171) supplies the first relay valve (74) with air supplied from the air supply source (21).

11. The pneumatic brake system according to claim 9 or 10, wherein
the air supplier comprises a pneumatic control valve (73) which inputs air as a pneumatic signal from the brake mechanism (150) when a parking brake is released, and
the pneumatic control valve (73) takes a connection position where air is supplied to the first relay valve (74) when the pneumatic signal is inputted, and takes a position where supply of air to the first relay valve (74) is stopped when the pneumatic signal is not inputted.

12. The pneumatic brake system according to any one of claims 9 to 11, wherein the safety module (132L, 132R, 142L, 142R) includes:
a safety solenoid control valve (90) which is controlled by the second brake control device;
a shuttle valve (34) which allows a flow of air from one of the first relay valve (74) and the safety solenoid control valve (90) that has higher pressure; and
a second relay valve (92) which supplies air stored in the air supply source (21) to the brake mechanism (150) when air supplied from the shuttle valve (34) is inputted as a pneumatic signal.

## Patentansprüche

1. Pneumatisches Bremssystem (20), das so ausgeführt ist, dass es eine Bremse durch Zuführen von Luft zu einem Bremsmechanismus (50) betätigt, der an jedem Rad (51, 52) eines Fahrzeugs (100) vorhanden ist, und die Bremse durch Ableiten von Luft aus dem Bremsmechanismus (50) löst, wobei das pneumatische Bremssystem für jeden Bremsmechanismus (50) umfasst:
eine Sicherheits-Luftzuführeinrichtung (33), die in einem Notfall von einer Sicherheits-Bremssteuerungsvorrichtung (15B) betätigt wird, um dem Bremsmechanismus (50) Luft zuzuführen; sowie
ein Wechselventil (34),
**dadurch gekennzeichnet, dass**
das Wechselventil (34) mit der Sicherheits-Luftzuführeinrichtung (33) und einem Brems-Luftzufuhrkreis verbunden ist, mit dem dem Bremsmechanismus (50) im Normalzustand Luft über einen Weg zugeführt wird, der sich von der Sicherheits-Luftzuführeinrichtung (33) unterscheidet, wobei das Wechselventil (34) einen Strom von Luft zu dem Bremsmechanismus (50) nur in einer Richtung von der Sicherheits-Luftzuführeinrichtung (33) oder dem Brems-Luftzufuhrkreis in Abhängigkeit davon zulässt, welche Einrichtung höheren Druck aufweist.

2. Pneumatisches Bremssystem nach Anspruch 1, das des Weiteren ein Zwangsbrems-Magnetventil (71) umfasst, das von einer Haupt-Steuerungsvorrichtung (11B) gesteuert wird, die so ausgeführt ist, dass sie eine Bremsanforderung an die Sicherheits-Bremssteuerungsvorrichtung (15B) ausgibt, die die Sicherheits-Luftzuführeinrichtung (33) steuert, wobei
das Zwangsbrems-Magnetventil (71) Luftzufuhr von einer Luftzufuhrquelle (21), die Druckluft speichert, zu dem Bremsmechanismus (50) in einem erregten Zustand unterbricht, in dem das Zwangsbrems-Magnetventil (71) von der Haupt-Steuerungsvorrichtung (11B) erregt wird, und in einem nicht erregten Zustand dem Bremsmechanismus (50) Luft von der Luftzufuhrquelle (21) zuführt, und
das Wechselventil (34) Zufuhr von Luft von dem Zwangsbrems-Magnetventil (71) zu dem Bremsmechanismus (50) zulässt, wenn Luft von dem Zwangsbrems-Magnetventil (71) zugeführt wird.

3. Pneumatisches Bremssystem nach Anspruch 2, wobei
eine Ventilvorrichtung (72), die mit einem luftgetriebenen Aufhängungssystem in Verbindung steht, zwischen dem Zwangsbrems-Magnetventil (71) und der Sicherheits-Luftzuführeinrichtung (33) vorhanden ist, und die Ventilvorrichtung (72) eine dem Bremsmechanismus (50) zugeführte Luftmenge entsprechend einer Zunahme einer Nutzlast des Fahrzeugs (100) vergrößert.

4. Pneumatisches Bremssystem nach Anspruch 2 oder 3, wobei
die Sicherheits-Brems-Steuerungsvorrichtung (15B) so ausgeführt ist, dass sie eine Abweichung in einer Haupt-Bremssteuerungsvorrichtung (15A) erfasst, die einen Luftzufuhrkreis steuert, der sich von der Sicherheits-Luftzuführeinrichtung (33) unterscheidet, und das Fahrzeug (100) veranlasst, mit einer vorgeschriebenen Geschwindigkeit zu fahren oder anzuhalten, indem sie dem Bremsmechanismus (50) auf Basis der Bremsanforderung von der Haupt-Steuerungsvorrichtung (11B) Luft zuführt.

5. Pneumatisches Bremssystem nach Anspruch 2 oder 3, wobei
wenn Abweichungen sowohl in einer Haupt-Bremssteuerungsvorrichtung (15A), die einen Luftzufuhrkreis steuert, der sich von der Sicherheits-Luftzuführeinrichtung (33) unterscheidet, als auch in der Haupt-Steuerungsvorrichtung (11B) auftreten, das Zwangsbrems-Magnetventil (71) in einen nicht erregten Zustand versetzt wird und die Bremse zwangsweise betätigt wird.

6. Pneumatisches Bremssystem, das so ausgeführt ist, dass es Luft von einer Luftzufuhrquelle (21) einem Bremsmechanismus (150), der eine Betriebsbremse eines Fahrzeugs (100) betätigt und löst, zuführt und von ihm ableitet, wobei das pneumatische Bremssystem eine Vielzahl von Sicherheitsmodulen (132L, 132R, 142L, 142R) umfasst, **dadurch gekennzeichnet, dass:**
wenn ein Modulator, der im Normalzustand von einer ersten Brems-Steuerungsvorrichtung gesteuert wird, nicht anspricht, jedes Sicherheitsmodul (132L, 132R, 142L, 142R) von einer zweiten Brems-Steuerungsvorrichtung gesteuert wird und Zufuhr und Ableitung von Luft zu/von dem Bremsmechanismus (150) durchführt, wobei die zweite Brems-Steuerungsvorrichtung nur Bremsen in einem vorgeschriebenen Zustand steuert, in dem eine Abweichung in der ersten Brems-Steuerungsvorrichtung aufgetreten ist.

7. Pneumatisches Bremssystem nach Anspruch 6, wobei
die Luftzufuhrquelle (21) und der Modulator in einem ersten Zufuhrsystem enthalten sind, und das pneumatische Bremssystem des Weiteren eine Luftzuführeinrichtung umfasst, die in einem zweiten Zufuhrsystem, das sich von dem ersten Zufuhrsystem unterscheidet, von der Luftzufuhrquelle (21) zugeführte Luft als pneumatische Signale an die Vielzahl von Sicherheitsmodulen (132L, 132R, 142L, 142R) verteilt.

8. Pneumatisches Bremssystem nach Anspruch 7, wobei
die Luftzuführeinrichtung eine einer Vielzahl von Luftzuführeinrichtungen ist, und jedes Sicherheitsmodul (132L.132R, 142L.142R) in einem einer Vielzahl von Rädern (51, 52) des Fahrzeugs (100) vorhanden und mit einer der Vielzahl von Luftzuführeinrichtungen verbunden ist.

9. Pneumatisches Bremssystem nach Anspruch 7 oder 8, wobei die Luftzuführeinrichtung enthält:
ein Magnet-Steuerventil (171), das von der Luftzufuhrquelle (21) zugeführte Luft als ein pneumatisches Signal zuführt; sowie
ein erstes Relaisventil (74), das in der Luftzufuhrquelle (21) gespeicherte Luft in entsprechend einem Vorhandensein oder Nichtvorhandensein des pneumatischen Signals an die Vielzahl von Sicherheitsmodulen (132L, 132R, 142L, 142R) verteilt.

10. Pneumatisches Bremssystem nach Anspruch 9, wobei
das Magnet-Steuerventil (171) in nicht erregtem Zustand dem ersten Relaisventil (74) von der Luftzufuhrquelle (21) zugeführte Luft zuführt.

11. Pneumatisches Bremssystem nach Anspruch 9 oder 10, wobei
die Luftzuführeinrichtung ein pneumatisches Steuerventil (73) umfasst, das Luft als ein pneumatisches Signal von dem Bremsmechanismus (150) einleitet, wenn eine Feststellbremse gelöst wird, und
das pneumatische Steuerventil (73) eine Verbindungsposition einnimmt, in der dem ersten Relaisventil (74) Luft zugeführt wird, wenn das pneumatische Signal eingeleitet wird, und eine Position einnimmt, in der Zufuhr von Luft zu dem ersten Relaisventil (74) unterbrochen wird, wenn das pneumatische Signal nicht eingeleitet wird.

12. Pneumatisches Bremssystem nach einem der Ansprüche 9 bis 11, wobei das Sicherheitsmodul (132L, 132R, 142L, 142R) enthält:
ein Sicherheits-Magnet-Steuerventil (90), das von der zweiten Brems-Steuerungsvorrichtung gesteuert wird;
ein Wechselventil (34), das einen Strom von Luft von dem ersten Relaisventil (74) oder dem Sicherheitsmagnetventil (90) in Abhängigkeit davon zulässt, welches Ventil höheren Druck aufweist; sowie
ein zweites Relaisventil (92), das in der Luftzufuhrquelle (21) gespeicherte Luft dem Bremsmechanismus (150) zuführt, wenn von dem Wechselventil (34) zugeführte Luft als ein pneumatisches Signal eingeleitet wird.

## Revendications

1. Système de frein pneumatique (20) configuré pour actionner un frein en alimentant de l'air à un mécanisme de frein (50) pourvu sur chaque roue (51, 52) d'un véhicule (100) et pour libérer le frein en évacuant de l'air du mécanisme de frein (50), le système de frein pneumatique comprenant, pour chaque mécanisme de frein (50) :
un dispositif d'alimentation d'air de sécurité (33) qui est actionné par un dispositif de contrôle de frein de sécurité (15B) en cas d'urgence pour alimenter de l'air au mécanisme de frein (50) ; et
un clapet-navette (34),
**caractérisé en ce que**
ledit clapet-navette (34) est connecté au dispositif d'alimentation d'air de sécurité (33) et à un circuit d'alimentation d'air de frein pour alimenter de l'air au mécanisme de frein (50) en temps normal via une voie différente depuis le dispositif d'alimentation d'air de sécurité (33), dans lequel le clapet-navette (34) permet un écoulement d'air uniquement en direction du mécanisme de frein (50) depuis un composant parmi le dispositif d'alimentation d'air de sécurité (33) et le circuit d'alimentation d'air de frein qui a une pression plus élevée.

2. Système de frein pneumatique selon la revendication 1, comprenant en outre une électrovanne de frein forcé (71) qui est contrôlée par un dispositif de contrôle principal (11B) configuré pour envoyer une requête de freinage au dispositif de contrôle de frein de sécurité (15B) qui contrôle le dispositif d'alimentation d'air de sécurité (33), dans lequel
l'électrovanne de frein forcé (71) coupe l'alimentation d'air allant d'une source d'alimentation d'air (21) qui stocke de l'air comprimé au mécanisme de frein (50) dans un état énergisé dans lequel l'électrovanne de frein forcé (71) est énergisée par le dispositif de contrôle principal (11B), et alimente de l'air de la source d'alimentation d'air (21) au mécanisme de frein (50) dans un état non énergisé, et
le clapet-navette (34) permet d'alimenter de l'air de l'électrovanne de frein forcé (71) au mécanisme de frein (50) quand de l'air est alimenté par l'électrovanne de frein forcé (71).

3. Système de frein pneumatique selon la revendication 2, dans lequel
un dispositif de vanne (72) qui communique avec un système de suspension à air est pourvu entre l'électrovanne de frein forcé (71) et le dispositif d'alimentation d'air de sécurité (33), et le dispositif de vanne (72) augmente la quantité d'air alimenté au mécanisme de frein (50) conformément à une augmentation de charge utile du véhicule (100) .

4. Système de frein pneumatique selon la revendication 2 ou 3, dans lequel
le dispositif de contrôle de frein de sécurité (15B) est configuré pour détecter une anomalie dans un dispositif de contrôle de frein principal (15A) contrôlant un circuit d'alimentation d'air qui diffère du dispositif d'alimentation d'air de sécurité (33), et pour commander au véhicule (100) de circuler à une vitesse prescrite ou d'arrêter d'alimenter de l'air au mécanisme de frein (50) sur la base de la requête de freinage provenant du dispositif de contrôle principal (11B).

5. Système de frein pneumatique selon la revendication 2 ou 3, dans lequel
quand se produisent des anomalies aussi bien dans un dispositif de contrôle de frein principal (15A) contrôlant un circuit d'alimentation d'air qui diffère du dispositif d'alimentation d'air de sécurité (33) que dans le dispositif de contrôle principal (11B), l'électrovanne de frein forcé (71) est placée dans un état non énergisé et le frein est actionné de force.

6. Système de frein pneumatique configuré pour alimenter et évacuer de l'air depuis une source d'alimentation d'air (21) vers et depuis un mécanisme de frein (150) qui actionne et libère un frein de service d'un véhicule (100), le système de frein pneumatique comprenant une pluralité de modules de sécurité (132L, 132R, 142L, 142R),
**caractérisé en ce que,**
quand un modulateur contrôlé par un premier dispositif de contrôle de frein en temps normal n'est pas actionné, chaque module de sécurité (132L, 132R, 142L, 142R) est contrôlé par un deuxième dispositif de contrôle de frein et met en œuvre l'alimentation et l'évacuation d'air vers et depuis le mécanisme de frein (150), dans lequel ledit deuxième dispositif de contrôle de frein contrôle uniquement le freinage dans un état déterminé où une anomalie s'est produite dans ledit premier dispositif de contrôle de frein.

7. Système de frein pneumatique selon la revendication 6, dans lequel
la source d'alimentation d'air (21) et le modulateur sont inclus dans un premier système d'alimentation, et le système de frein pneumatique comprend en outre un dispositif d'alimentation d'air qui, dans un deuxième système d'alimentation qui diffère du premier système d'alimentation, distribue de l'air alimenté par la source d'alimentation d'air (21) à la pluralité de modules de sécurité (132L, 132R, 142L, 142R) sous forme de signaux pneumatiques.

8. Système de frein pneumatique selon la revendication 7, dans lequel
le dispositif d'alimentation d'air est un dispositif parmi une pluralité de dispositifs d'alimentation d'air, et chaque module de sécurité (132L, 132R, 142L, 142R) est pourvu dans une roue d'une pluralité de roues (51, 52) du véhicule (100) et connecté à un dispositif de la pluralité de dispositifs d'alimentation d'air.

9. Système de frein pneumatique selon la revendication 7 ou 8, dans lequel le dispositif d'alimentation d'air comprend :
une vanne de contrôle d'électrovanne (171) qui alimente de l'air alimenté par la source d'alimentation d'air (21) sous forme d'un signal pneumatique ; et
une première vanne-relais (74) qui distribue de l'air stocké dans la source d'alimentation d'air (21) à la pluralité de modules de sécurité (132L, 132R, 142L, 142R) conformément à la présence ou à l'absence du signal pneumatique.

10. Système de frein pneumatique selon la revendication 9, dans lequel
durant la non-énergisation, la vanne de contrôle d'électrovanne (171) alimente la première vanne-relais (74) avec de l'air alimenté par la source d'alimentation d'air (21) .

11. Système de frein pneumatique selon la revendication 9 ou 10, dans lequel
le dispositif d'alimentation d'air comprend une vanne de contrôle pneumatique (73) qui entre de l'air sous forme d'un signal pneumatique provenant du mécanisme de frein (150) quand un frein de stationnement est libéré, et
la vanne de contrôle pneumatique (73) adopte une position de connexion où de l'air est alimenté à la première vanne-relais (74) quand le signal pneumatique est entré, et adopte une position où l'alimentation d'air à la première vanne-relais (74) est arrêtée quand le signal pneumatique n'est pas entré.

12. Système de frein pneumatique selon l'une quelconque des revendications 9 à 11, dans lequel le module de sécurité (132L, 132R, 142L, 142R) comprend :
une vanne de contrôle d'électrovanne de sécurité (90) qui est contrôlée par le deuxième dispositif de contrôle de frein ;
un clapet-navette (34) qui permet un écoulement d'air depuis une vanne parmi la première vanne-relais (74) et la vanne de contrôle d'électrovanne de sécurité (90) qui a une pression plus élevée ; et
une deuxième vanne-relais (92) qui alimente de l'air stocké dans la source d'alimentation d'air (21) au mécanisme de frein (150) quand l'air alimenté par le clapet-navette (34) est entré sous forme d'un signal pneumatique.
